# FASCICULE DE BREVET EUROPEEN

(11) **EP 2 404 775 B1**
(45) Date de publication et mention de la délivrance du brevet: **22.10.2014**
(21) Numéro de dépôt: 11005139.8
(22) Date de dépôt: 24.06.2011
(51) Int. Cl.: B60K 6/48, B64D 27/24, B64C 27/04, B60L 3/00, B60L 11/14, B60L 11/00, B60L 11/12, B64C 27/14, B60L 11/18, B64D 27/02

(54) **Architecture électrique pour aéronef à voiture tournante à motorisation hybride et Procédé**
Elektrische Architektur eines Drehflüglers mit Hybrid Motorisierung und Verfahren
Electric architecture for a rotorcraft with hybrid motorisation and Method

(30) Priorité: 08.07.2010 FR 1002867
(43) Date de publication de la demande: 11.01.2012
(73) Titulaire: Airbus Helicopters, 13725 Marignane Cedex (FR)
(72) Inventeur: Hopdjanian, Marie-Laure, 13012 Marseille (FR); Connaulte, Mathieu, 13540 Puyricard (FR); Gazzino, Marc, 13012 Marseille (FR); Mercier, Christian, 13580 La Fare Les Oliviers (FR)
(74) Mandataire: GPI & Associés

(56) Documents cités:
- DE-A1-102007 017 332
- DE-A1-102008 014 404
- US-A- 4 380 725
- US-A1- 2007 257 558
- US-A1- 2009 140 095
- US-A1- 2009 145 998

## Description

L'invention est du domaine des aéronefs à voilure tournante (e.g. hélicoptère, giravions et analogues). Elle relève plus particulièrement des modalités dites « hybrides » d'entraînement en rotation d'au moins un rotor par l'intermédiaire d'une boîte de transmission de l'aéronef.

A l'instar du domaine automobile, une motorisation « hybride » désigne ici le choisir comme puissance mécanique, entre une source à combustion, une source électrique, ou ces deux sources conjointement.

Bien qu'en pratique, il n'existe pas actuellement d'hélicoptère hybride de série, de nombreux types d'aéronefs à voilure tournante peuvent être concernés par l'invention.

De fait, un aéronef à voilure tournante selon l'invention peut comporter un ou plusieurs rotors de sustentation dits « rotors principaux » et / ou un ou plusieurs rotors auxiliaires.

Par « rotor auxiliaire » on désigne par exemple les rotors anti-couple (souvent arrières), ou les rotors propulseurs comme dans le cas d'un agencement latéral à hélices sur un hélicoptère rapide à longue portée (e.g. voir documents évoqués plus loin).

Sur la plupart des aéronefs à voilure tournante, un rotor est entraîné par l'intermédiaire d'une boîte de transmission. Par exemple, un rotor de sustentation est souvent entraîné par l'intermédiaire d'une boîte de transmission dite principale (ou BTP). Certains rotors auxiliaires, comme un rotor anti-couple, sont en général entraînés par l'intermédiaire d'une boîte de transmission dite arrière (ou BTA).

Citons maintenant divers documents connus.

Les documents relatifs aux rotors propulseurs d'agencement latéral pour hélicoptère rapide à longue portée sont les documents FR2929243, FR2916418, FR2916419 ou FR2916420.

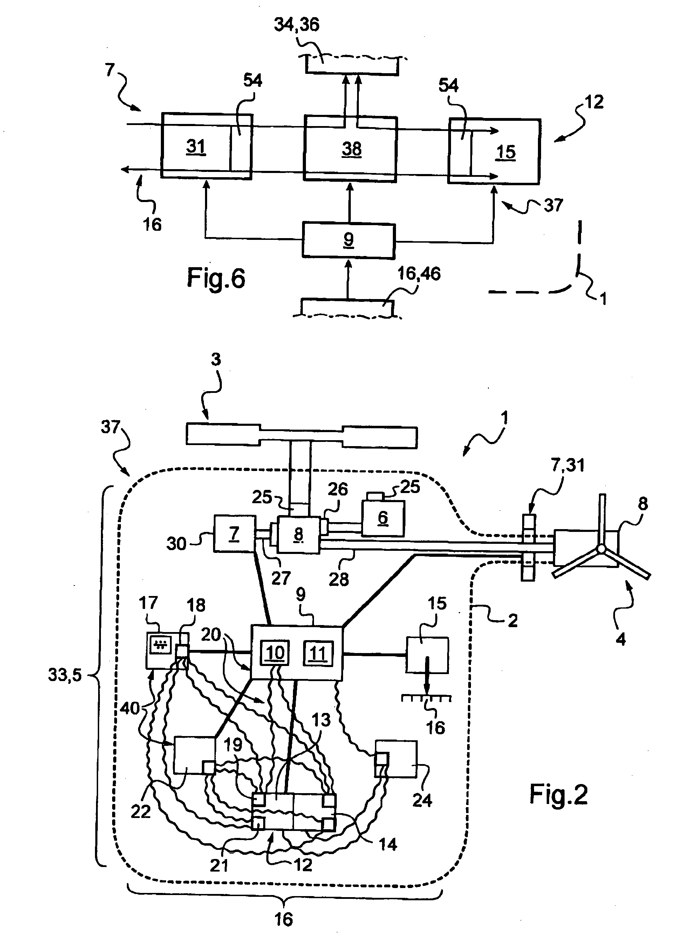

Le document US20090145998, qui est considéré l'état de la technique le plus proche, décrit un véhicule qui incorpore une propulsion hybride à turbine à gaz / électrique. Les figures 2A ou 2B montrent une application à un hélicoptère. Ce document ne décrit pas un aéronef où un moteur à combustion est couplé mécaniquement via une transmission, à un rotor et où deux réseaux électriques sont reliés par une interface d'adaptation sélective.

Le document DE102008014404 décrit un aéronef à entrainement hybride, par exemple d'un drone d'hélicoptère. Une turbine entraine un générateur dont le courant alimente un moteur électrique et / ou assume la charge de batteries. Le moteur électrique est piloté pour fonctionner avec le courant de batteries de secours en cas de défaillance de la turbine.

Le document US4380725 décrit une alimentation en courant continu par batteries qui comporte une pluralité de sous systèmes, dont chacun possède un capteur de température. Un connecteur BTC relie deux Bus de liaison des sous systèmes. La tension de sortie de chaque générateur est régulée, en fonction des hausses de température mesurées par les capteurs.

Par ailleurs, le document US2009140095 décrit un entraînement par l'intermédiaire d'une boîte de transmission distingue à priori l'invention des agencements où un moteur électrique assurant à lui seul toutes les situations d'entraînement d'un rotor principal, est intégré directement au mât de rotation ce rotor, comme.

Le document FR0905678 (publié sous FR2952907) décrit un aéronef à voilure tournante à « modalités hybrides d'entraînement », avec un exemple de motorisation hybride mise en oeuvre sur un hélicoptère. Cet hélicoptère à motorisation hybride comporte, pour compléter ou remplacer l'entraînement produit par une motorisation à combustion, une motorisation électrique mécaniquement liée tout comme la motorisation à combustion à une boîte de transmission, pour pouvoir mettre en mouvement un rotor.

Ce moteur électrique est classiquement un moteur sans balais ou « brushless », dimensionné en fonction de la première puissance maximale à fournir. De plus, ce moteur électrique peut fonctionner en mode générateur et au besoin servir de ralentisseur pour des boîtes de transmissions. Un moyen de mise hors circuit de batteries principales est actionnable par le pilote pour activer ou arrêter les moteurs électriques. Ces moteurs, un ensemble de batteries et un organe de régulation sont indépendants des équipements, notamment du moteur thermique et du réseau électrique de l'hélicoptère.

Selon l'invention, les modalités d'entraînement en rotation de rotor(s) sont de type « hybrides », au sens où elles associent un ou plusieurs moteur(s) à combustion (e.g. turbomoteur et / ou moteur à explosion, par exemple diesel) à une ou plusieurs machines(s) électrique(s) de motorisation. Soulignons que ces moteurs à combustion et machines électrique(s) sont respectivement en prise sur une transmission (boîte de transmission BTP, BTA ou autre), cette transmission s'interposant avec le rotor. En d'autres termes, la motorisation recourt à un ou plusieurs ensembles mécaniques (en anglais « drive system ») généralement appelés transmissions.

Pour illustrer ce qu'on désigne par « architecture électrique », citons le document FR2526380 qui décrit la production et la distribution d'énergie électrique pour un hélicoptère, et notamment ce qu'il est courant de désigner par « coeur électrique ». Selon ce document, des contacteurs et disjoncteurs primaires sont répartis entre le coeur électrique, des boîtes à relais, des meubles électroniques et des panneaux de commande (analogiques et / ou numériques). Le coeur électrique forme une unité centrale qui regroupe aussi différents dispositifs de protection ou sécurité.

A titre d'arrière plan technologique, citons d'autres documents.

Le document DE102008014404 décrit un drone d'hélicoptère, qui possède une turbine à générateur, apte à produire du courant électrique qui est fourni à une motorisation ou à des batteries d'alimentation de ladite motorisation. Ce document décrit ce que l'on appelle une architecture hybride série, c'est-à-dire un moteur à combustion interne qui fournit sa puissance aux rotors par l'intermédiaire d'un générateur puis, en série, d'un moteur électrique. Une batterie est intercalée en tant que tampon ou « buffer ».

Le document FR2909233 est un exemple de démarreur électrique apte à fonctionner en mode génératrice synchrone, dans un giravion, pour palier le fait qu'une motorisation à combustion est en général surdimensionnée. Un ou plusieurs moteurs électriques sont en prise sur une boîte de transmission, et sont exploitables en substitution du démarreur en mode générateur. En outre, les moteurs électriques sont utilisés pour l'alimentation de la réserve d'énergie basse-tension et d'équipements de bord, par l'intermédiaire d'un réseau électrique de bord basse-tension.

Le document US2009145998 décrit (notamment à sa figure 8B) un aéronef à double rotor, pourvu de turbines formant une première source de puissance motrice. Un couplage à un voire trois moteurs électriques à courant alternatif est possible. Un embrayage est interposé de façon à ce que la motorisation à turbine et un générateur d'électricité, distinct des moteurs électriques, soient sélectivement en prise ou non.

Ceci étant dit, divers problèmes à la base de l'invention sont exposés.

L'un de ces problèmes découle de la difficulté pratique de pouvoir proposer sur de nombreux modèles d'aéronefs une architecture électrique légère, fiable et efficace pour l'hybridation. Tout ceci sans compliquer ou alourdir l'architecture électrique alentours (pour l'adjonction d'hybridation).

Ceci est d'autant plus difficile que pour un aéronef donné, on désire que l'hybridation puisse être proposée à titre d'option. On souhaiterait alors une parfaite modularité de l'architecture.

Cette diversité de configurations réduit donc les possibilités d'uniformisation des architectures et de leurs constituants, entre modèles d'une même gamme d'aéronef et entre les différentes gammes d'un même constructeur.

Une « ségrégation » est possible selon l'invention, entre le réseau électrique principal et le réseau électrique auxiliaire d'hybridation, la conception des architectures électriques afférentes s'en trouvant étonnement simplifiée et l'aéronef pouvant au total s'avérer allégé, à profil de mission égal.

Il convient par ailleurs qu'une quantité appropriée d'énergie soit disponible à bord de l'aéronef, aux moments requis et ce de manière renouvelable. Cependant, des contraintes technologiques, économiques et environnementales (masse, sécurité, réglementations...) peuvent s'opposer à la garantie d'une distribution et d'un rechargement en énergie nécessaires, par l'architecture électrique.

Tous ces problèmes sont d'autant plus critiques que sont à intégrer à l'aéronef des fonctionnalités supplémentaires, fortes consommatrices d'énergie comme dégivrage, treuillage, ventilation et conditionnement d'air.

Pour autant, il convient de ne pas surcharger le générateur à gaz de son turbomoteur lorsqu'un tel organe est couplé à la transmission de motorisation principale.

A profil de mission global donné, il serait aussi souhaitable de pouvoir réaliser des gains de consommation de d'énergie, notamment du fait d'implications écologiques et de nouvelles réglementations.

Dans un autre registre, on sait que certains territoires ont des règlementations restrictives de survol par les aéronefs à voilure tournante monomoteurs. Or, selon les documents connus les architectures électriques des motorisations (principale monomoteur et auxiliaire) sont en interdépendance et n'apportent donc aucune solution acceptable en pratique dans ce domaine.

Un autre problème est lié au fait que la demande est croissante en équipements de bord supplémentaires et sophistiqués (dégivrage, treuillage, ventilateurs, conditionnement d'air, etc.). La masse embarquée d'un aéronef tend donc à augmenter, y compris durant sa durée de vie. De ce point de vue, en dépit de l'optimisation des équipements, la quête draconienne de réduction de poids peut constituer en pratique un obstacle à l'hybridation.

A fortiori, l'adjonction en option ou en série d'une hybridation (dont les structures fonctionnelles peuvent représenter une masse de l'ordre de plusieurs dizaines de kilogrammes, voire plus que celle de l'ensemble des autres structures de génération de courant), est antinomique et peut même s'avérer impossible si un modèle d'aéronef est déjà proche de sa limite de masse autorisée.

En conclusion on comprend qu'il n'est pas aisé de concevoir, d'adapter et de réaliser une motorisation hybride et son architecture; qui aient un impact favorable en termes de performances (notamment pour un aéronef à motorisation multiple tel qu'un bimoteur), ou en termes de sécurité (notamment pour un aéronef à motorisation à combustion tel qu'un monomoteur).

L'invention vise à résoudre ces divers problèmes, notamment.

A cet effet, l'invention est définie par les revendiations.

Ainsi, un aéronef à voilure tournante, qui comporte un réseau électrique de bord et au moins : un ensemble de motorisation avec un rotor à entraîner en rotation, au moins une transmission et au moins un moteur à combustion d'entraînement en rotation dudit rotor par l'intermédiaire de ladite transmission.

Au moins un ensemble de motorisation de l'aéronef est hybride, et associe au moteur à combustion dit principal à au moins une machine électrique auxiliaire d'hybridation (et de motorisation). Le moteur à combustion principal et la machine électrique auxiliaire sont mécaniquement couplés à la transmission dudit ensemble de motorisation hybride.

La machine électrique auxiliaire est agencée en générateur de courant et placée au sein de l'ensemble de motorisation hybride en constituant alternativement un organe d'entraînement mécanique de la transmission ou un organe générateur de courant sous l'effet de son entraînement mécanique par ladite transmission.

Le réseau électrique de bord possède au moins un bus électrique principal sous une tension nominale principale. Sur le bus électrique principal sont montés au moins un dispositif principal d'apport de charge électrique avec au moins une batterie principale d'accumulateurs, et une machine électrique formant démarreur, réversible en générateur, cette machine électrique formant démarreur étant mécaniquement relié audit moteur à combustion.

Selon une caractéristique, l'ensemble de motorisation hybride de l'aéronef comporte au moins un système d'hybridation avec au moins un réseau électrique auxiliaire pour l'hybridation, qui possède au moins un bus électrique auxiliaire dédié auquel est électriquement connectée ladite machine électrique auxiliaire, sous une tension nominale auxiliaire. Le bus électrique principal et le bus électrique auxiliaire d'hybridation sont reliés par au moins une interface d'adaptation sélective, de sorte que le réseau électrique de bord principal et le réseau électrique auxiliaire sont électriquement distinctibles.

Selon une caractéristique, la machine électrique formant démarreur est électriquement montée sur le réseau électrique principal, par l'intermédiaire de moyens de mise hors circuit d'un dispositif d'apport de charge dit principal, au sein du réseau électrique principal.

Tandis que sont connectés électriquement sur le bus électrique auxiliaire, d'une part un module de contrôle et pilotage ainsi que ledit moteur électrique auxiliaire, et d'autre part au moins une interface d'adaptation sélective agencée pour sélectivement permettre, par connexion sélective au réseau électrique principal, des échanges d'énergie électrique entre les réseaux électriques principal et auxiliaire.

Par ailleurs, la machine électrique auxiliaire qui est mécaniquement reliée à cette transmission, est électriquement connecté au bus électrique auxiliaire, en parallèle d'au moins un dispositif d'apport de charge dit auxiliaire ; le dispositif d'apport auxiliaire de charge, le module de contrôle, la machine électrique auxiliaire, le réseau électrique auxiliaire et l'interface d'adaptation sélective faisant partie du système d'hybridation.

Selon une caractéristique, l'ensemble de motorisation comporte une boîte de transmission principale (BTP) unique, mécaniquement reliée à au moins un rotor de sustentation de l'aéronef et à un moteur à combustion unique, tel qu'un turbomoteur ou moteur diesel, au moins une machine électrique auxiliaire étant reliée à cette boîte.

Selon autre une caractéristique, l'ensemble de motorisation comporte une boîte de transmission principale (BTP) unique, mécaniquement reliée à au moins un rotor de sustentation de l'aéronef et à plusieurs moteurs à combustion, tel que deux turbomoteurs ou moteurs diesel, au moins une machine électrique auxiliaire étant reliée à cette boîte.

Selon autre une caractéristique, l'ensemble de motorisation comporte une boîte de transmission principale (BTP) unique, au moins deux machines électriques auxiliaire étant directement reliées à cette boîte.

Selon une caractéristique, l'ensemble de motorisation comporte au moins une boîte de transmission auxiliaire (BTA), mécaniquement reliée à au moins un rotor auxiliaire, tel que rotor(s) anti-couple et / ou rotor(s) propulseur d'au moins un agencement latéral à hélices d'aéronef à voilure tournante rapide à longue portée, au moins une machine électrique auxiliaire étant reliée à cette boîte.

Dans une autre réalisation, au moins un contacteur de clivage est agencé dans le système d'hybridation, entre deux bus principaux et / ou deux bus auxiliaires.

Dans une autre réalisation, le réseau électrique de bord est sous une tension nominale principale et / ou d'un type de phase distincts au principal respectivement d'une tension nominale auxiliaire et / ou d'un type de phase auxiliaire (continu, alternatif monophasé, biphasé ou triphasé) d'un courant nominal du réseau électrique auxiliaire ; dès lors l'interface d'adaptation sélective d'échanges d'énergie entre ces réseaux électriques principal et auxiliaire comporte au moins un convertisseur de phase.

Selon une mise en oeuvre où tension nominale et/ type de phase sont distincts entre les réseaux électriques principal et auxiliaire, au moins un convertisseur de phase de l'interface d'adaptation sélective d'échanges est réversible, entre un sens d'échange d'énergie de fourniture de courant vers le réseau électrique principal et un sens d'échange d'énergie de fourniture de courant vers le réseau électrique auxiliaire.

Dans une réalisation, au moins une batterie auxiliaire d'accumulateurs est de type électrochimique et / ou capacitif, au sein d'au moins un dispositif d'apport principal et / ou auxiliaire et / ou cinétique.

Selon une caractéristique, le système d'hybridation est dit multicanaux et comporte au moins deux machines électriques auxiliaires, chacune avec en commun au moins un dispositif d'apport de charge auxiliaire et / ou un module de contrôle et / ou une interface d'adaptation sélective.

Selon une autre réalisation, le système d'hybridation est dit multicanaux et comporte au moins deux machines électriques auxiliaires, chaque canal ayant au moins un dispositif d'apport de charge auxiliaire et / ou un module de contrôle et / ou une interface d'adaptation sélective propre(s).

Selon une caractéristique, l'ensemble de motorisation hybride comprend au moins un moteur à combustion principal sous forme de turbomoteur couplé à une machine électrique formant démarreur, réversible en générateur, sous basse-tension, qui est en prise mécanique sur le turbomoteur et qui est placée sur un réseau électrique principal sous basse-tension ; un système d'hybridation comportant au moins une machine électrique auxiliaire sous forme de moteur électrique / générateur de courant haute-tension, cette machine électrique auxiliaire étant à courant continu, en prise mécanique sur la transmission en étant placé sur le réseau électrique auxiliaire sous haute-tension dudit système d'hybridation.

Selon une caractéristique, l'ensemble de motorisation hybride comprend des moyens électroniques de commande de la mise en oeuvre du ou des moteurs à combustion principaux et / ou du ou des machines électriques auxiliaires, qui sont en relation avec l'un au moins d'un pupitre de commande manuelle et / ou d'un automate de commande de vol de l'ensemble de motorisation hybride, le pupitre et / ou l'automate étant reliés ainsi qu'alimentés via le réseau électrique principal.

Selon une caractéristique, l'ensemble de motorisation hybride comprend des moyens électroniques de contrôle de l'état et du fonctionnement du ou des moteurs à combustion principaux et / ou de la ou des machines électriques auxiliaires, ces moyens électroniques de contrôle étant reliés ainsi qu'alimentés via le réseau électrique principal.

Dans une réalisation les moyens électroniques de contrôle sont en relation avec des moyens d'information de l'état et du fonctionnement du ou des moteurs à combustion principaux et / ou de la ou des machines électriques auxiliaires, ces moyens électroniques de contrôle étant reliés ainsi qu'alimentés via le réseau électrique principal.

Selon une caractéristique, l'aéronef comporte un groupe auxiliaire de puissance (GAP, en anglais « Auxiliary Power Unit » ou APU ») à générateur auxiliaire ; ce groupe auxiliaire de puissance est mécaniquement relié à ladite transmission de l'ensemble de motorisation hybride, de façon être relié et à fournir de l'électricité au réseau électrique de bord et / ou au réseau électrique auxiliaire dans certaines phases de vol.

Dans une réalisation les moyens électroniques de contrôle sont associés à des moyens de mesure, d'analyse et de mémoire, qui comprennent l'un au moins des composants suivants :
- un capteur de tension de l'un au moins du réseau électrique principal et / ou du réseau électrique auxiliaire, ledit capteur de tension étant associé à des moyens de comparaison entre la ou les tensions captées et au moins une tension de consigne ;
- un capteur de courant de l'un au moins du réseau électrique principal et / ou du réseau électrique auxiliaire, ledit capteur de courant étant associé à des moyens de comparaison entre le ou les courants captés et au moins un courant de consigne ;
- un capteur de température l'un au moins du réseau électrique principal et / ou du réseau électrique auxiliaire, ce capteur de température étant associé à des moyens de comparaison entre la ou les températures captées et au moins une température de consigne ;
- des moyens d'analyse de l'état de charge d'au moins un dispositif d'apport de charge du réseau électrique de bord principal et / ou auxiliaire ;
- un capteur de vitesse de rotation d'un au moins des : moteur(s) à combustion et / ou machine électrique et / ou transmission ; et
- un compteur du nombre de cycles de recharge et de décharge d'au moins un dispositif d'apport de charge du réseau électrique de bord principal et / ou auxiliaire, ledit compteur de cycles étant associé à des moyens d'analyse de la durée de vie du ou des dispositifs d'apport de charge.

Selon une caractéristique, le système d'hybridation comporte au moins un système de récupération de l'énergie cinétique (SREC ou KERS pour « Kinetic Energy Recovery System » en anglais), mécaniquement relié à au moins une machine électrique auxiliaire pour récupérer une partie de l'énergie cinétique générée par ses décélérations et électriquement relié au réseau électrique auxiliaire de manière à pouvoir alimenter en retour cette machine électrique auxiliaire en cas de besoin.

Dans le cas d'un ensemble de motorisation pourvu d'au moins un système de récupération cinétique, un capteur de vitesse est couplé à ce système de manière à en déterminer la vitesse de rotation instantanée, par exemple intégré à des moyens de mesure d'analyse et de mémoire.

Un autre objet de l'invention est un procédé de mise en oeuvre d'un aéronef tel qu'évoqué. Ce procédé prévoit :
- en phase de démarrage du moteur à combustion, d'initier ce démarrage à partir d'au moins une machine électrique formant démarreur alors alimenté via le réseau électrique auxiliaire ;
- en phase de vol, d'entraîner la transmission par ledit moteur à combustion en mode de fonctionnement autonome ; et
- en phase de vol et pour un apport d'énergie mécanique occasionnel à la transmission, d'entraîner cette dernière à partir de la machine électrique auxiliaire agencée en moteur alimenté par au moins un dispositif d'apport de charge du réseau électrique principal, en complément de l'entraînement de la transmission par le moteur à combustion pour des commandes de vol spécifiques et / ou en substitution de l'entraînement de la transmission par ledit moteur à combustion en cas de défaillance de ce dernier.

Selon une mise en oeuvre de ce procédé, il prévoit d'alimenter le réseau électrique principal et / ou le réseau électrique de bord à partir du réseau électrique auxiliaire, par l'intermédiaire de l'interface d'adaptation sélective, pour le cas échéant :
- suppléer à une éventuelle défaillance de l'un au moins : du dispositif d'apport de charge du réseau électrique principal et / ou d'une machine électrique réversible ; et / ou
- soulager le moteur à combustion de l'entraînement de la machine électrique réversible.

Selon encore une mise en oeuvre de ce procédé, il prévoit que :
- en phase de démarrage du moteur à combustion, ce procédé opère :
- un entraînement de la transmission par la machine électrique formant moteur auxiliaire à une vitesse de consigne supérieure à celle assignée alors à l'entraînement du moteur à combustion par la machine électrique formant démarreur électrique réversible, pour désaccoupler le moteur à combustion de ladite transmission ;
- une mise au ralenti du moteur à combustion en mode de fonctionnement autonome de ce moteur à combustion (i.e. principal) ; et
- un accouplement par accostage du moteur à combustion avec la transmission à partir d'une accélération progressive du moteur à combustion jusqu'à une vitesse correspondant à celle d'entraînement de la transmission à roue libre par la machine électrique auxiliaire, via une roue libre ou analogues. On note que c'est cette roue libre entre moteur à combustion et transmission, qui opère leur désaccouplement.

Selon une autre mise en oeuvre de ce procédé, il prévoit que :
- qu'en phase de vol et au sol, on prélève de l'énergie mécanique à partir de la transmission par la machine électrique formant générateur auxiliaire pour provoquer un freinage dudit rotor relié à cette transmission.

Selon encore une autre mise en oeuvre de ce procédé, on prévoit un fonctionnement dédoublé de réplication d'alimentation des dispositifs d'apport auxiliaire de charge électrique, par exemple pour rendre la motorisation électrique redondante et par exemple compatible en tout territoire avec un vol aux instruments (IFR).

Dans des réalisations, des moyens d'affichage procurent à partir de données fournies par ces moyens de mesure d'analyse et de mémoire, une information (dédiée à l'équipage de l'aéronef), une valeur de temps d'usage de la machine électrique d'hybridation restant disponible à puissance maximale. Cette valeur de temps d'usage est prise en compte à partir d'un état de charge instantané de ladite machine électrique et de la première puissance que cette machine est à-même de délivrer à l'instant donné. Par exemple, cette première puissance est une puissance maximale.

On verra que pour apporter des solutions aux divers problèmes évoqués, l'architecture de l'invention est dite électriquement ségréguée, entre un réseau électrique principal dédié à la motorisation à combustion, et un réseau électrique auxiliaire (aussi dit annexe ou ancillaire) dédié à la motorisation d'hybridation, c'est-à-dire électrique.

Notamment, l'invention permet de mutualiser des ressources choisies, de rendre possibles sur divers types d'aéronefs à voilure tournante (légers, par exemple) des fonctionnalités jusqu'alors inaccessibles, mais aussi de permettre un délestage plus efficace du moteur à combustion (e.g. du générateur de gaz, et par ricochet du démarreur / générateur) ce qui aboutit à des économies de consommation globale d'énergie. De fait, l'impact écologique de l'invention est notable.

Des exemples de réalisation de la présente invention vont être décrits en relation avec les figures des planches annexées, dans lesquelles :

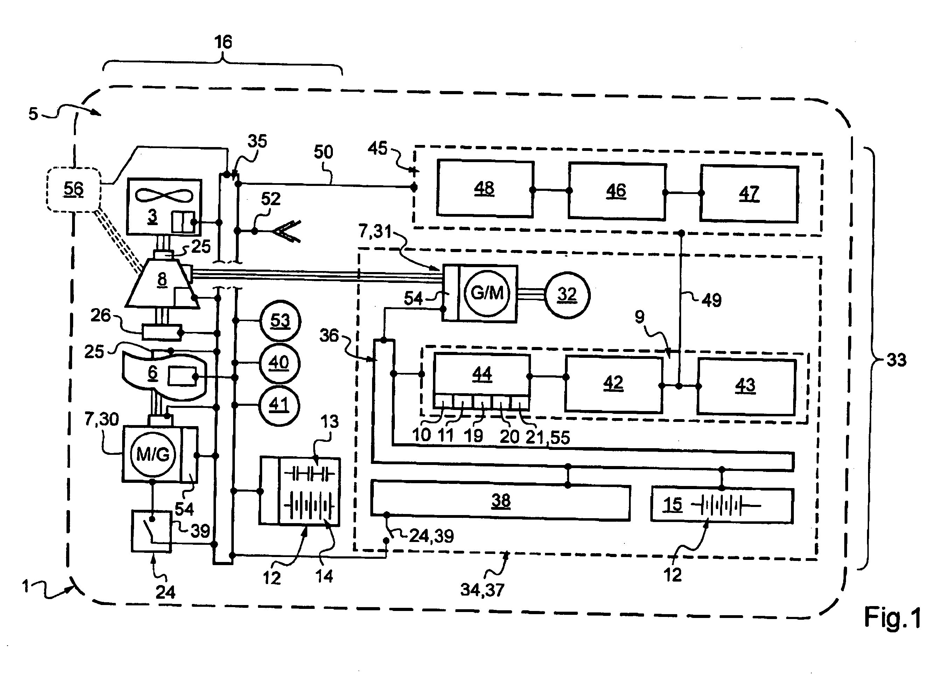

- la figure 1 est un schéma général de principe illustrant une réalisation d'architecture électriquement ségréguée pour un ensemble de motorisation hybride selon l'invention ; avec divers capteurs, et compteurs de moyens électroniques de contrôle ;
- la figure 2 est une représentation schématique d'un aéronef à voilure tournante conforme à l'invention, équipé d'un ensemble de motorisation hybride lui-même dépendant d'une architecture électriquement ségréguée selon l'invention ;

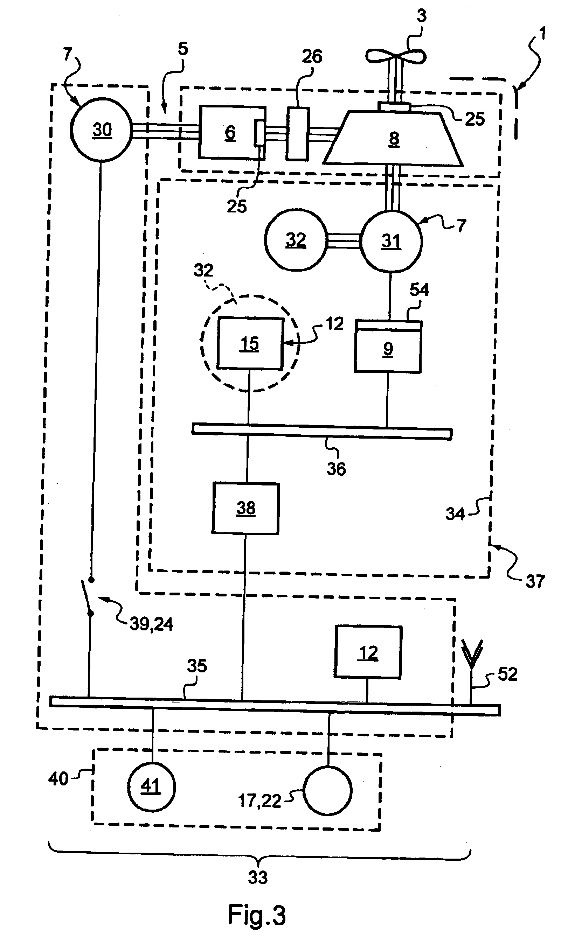

- la figure 3 est une représentation schématique d'un aéronef léger à voilure tournante, équipé d'une architecture électrique selon l'invention, avec un ensemble de motorisation monomoteur à combustion (Diesel dans certaines réalisations) et une machine électrique d'hybridation à laquelle est couplé à un système de récupération cinétique ; dans une réalisation, un système de récupération cinétique est monté sur le réseau auxiliaire en lieu et place de la batterie ;

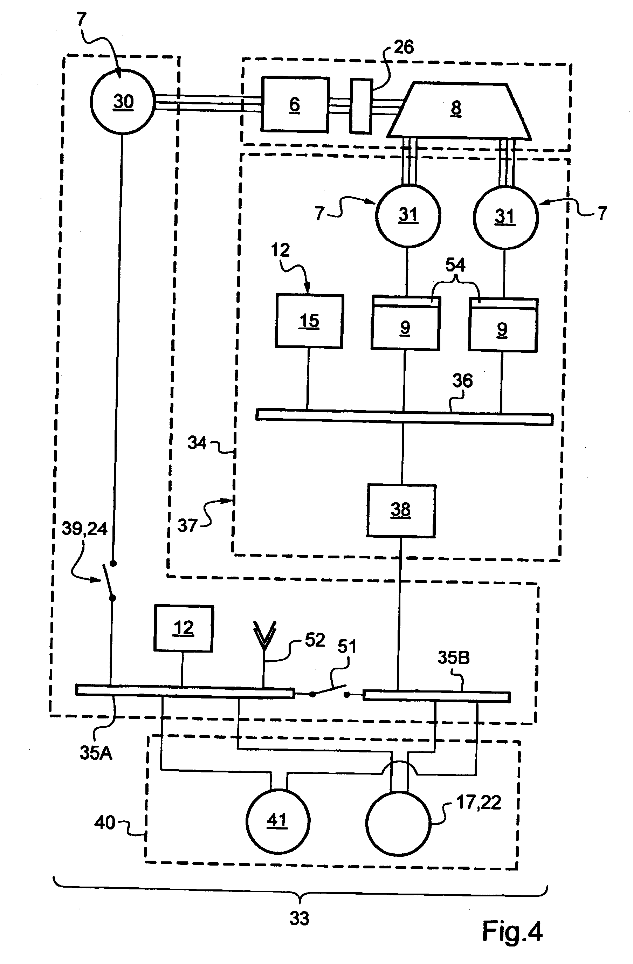

- la figure 4 est une représentation schématique d'un aéronef à voilure tournante équipé d'une architecture électrique selon l'invention, avec un ensemble de motorisation monomoteur à combustion et une double machine électrique d'hybridation, chacune couplée à une boîte de transmission principale (BTP), le réseau de bord comportant un double bus électrique sécable par un commutateur de clivage ;

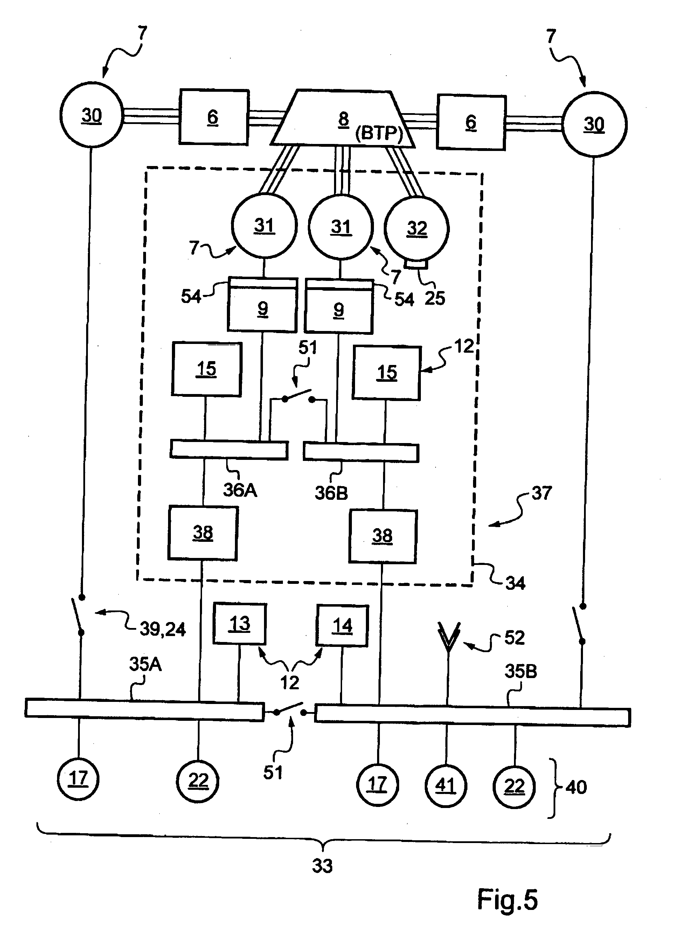

- la figure 5 est une représentation schématique d'un aéronef à voilure tournante équipé d'une architecture électrique selon l'invention, avec une motorisation bimoteurs à combustion et une paire de machines électriques d'hybridation couplées à la transmission en parallèle d'un système de récupération cinétique ; et
- la figure 6 est un schéma d'un détail d'architecture électrique selon l'invention, qui montre l'électronique de puissance de composants, couplés à un module de gestion de puissance électrique et à une unité de commande et de contrôle de l'ensemble de motorisation hybride de l'aéronef.

Des exemples de réalisation de l'invention sont décrits maintenant, en référence à ces figures.

Sur la figure 2, on voit un aéronef à voilure tournante 1, ici sous forme d'hélicoptère, avec une cellule 2, un rotor principal 3 de sustentation et un rotor arrière 4 anti-couple. Un ensemble de motorisation 5 comporte un moteur à combustion (principal) 6 et deux machines électriques 7 participant à la motorisation. Ces deux machines 7 sont couplées mécaniquement à une transmission 8 au moins. Ici, c'est à chacune à une boîte de transmission distincte, l'une principale (BTP) l'autre arrière (BTA), que sont couplées mécaniquement ces deux machines 7.

Il va de soi que la plupart des composants de l'ensemble de motorisation 5 comportent aussi une électronique de puissance. Tel est notamment le cas quand la ou les machines 7 sont utilisables en tant que moteurs électriques.

Ici, l'une des machines électriques 7 (référencée en 30 et dite démarreur électrique à fonction générateur) n'est directement couplée qu'à la boîte de transmission 8 principale ou BTP par ailleurs couplée mécaniquement et entraînée par le moteur à combustion 6. L'autre machine électrique 7 (référencée en 31 et dite d'hybridation ou auxiliaire), située à proximité du rotor arrière 4, est interposée entre la boîte de transmission 8 principale (BTP) et une boîte de transmission 8 arrière ou BTA. Dans des réalisations, la machine électrique 7 référencée en 31 d'hybridation ou auxiliaire, est couplée à d'autres emplacements de la transmission 8, e.g. à la boîte de transmission principale (BTP).

Dans cet aéronef 1, l'ensemble de motorisation 5 est pourvu d'un organe de régulation 9 muni d'un processeur de régulation 10 pour commander des première et deuxième machines électriques 7, à l'aide de lois programmées dans une mémoire 11 de régulation de l'organe de régulation 9. L'organe de régulation 9 est lié électriquement aux machines électriques 7 et à un (ou plusieurs) dispositif d'apport de charge électrique 12.

Sur la figure 1, un dispositif d'apport de charge électrique 12 possède une pluralité de batteries principales 13, 14. Ce dispositif 12 est dit principal, et est monté sur un réseau électrique de bord 16.

De plus, l'organe de régulation 9 est lié électriquement à une batterie secondaire 15 montée sur un réseau électrique de bord, dit réseau électrique 34 auxiliaire de l'aéronef 1. La batterie secondaire 15 forme ainsi un dispositif 12 d'apport de charge auxiliaire.

Dans le cadre de l'invention, ce réseau électrique de bord 16 est aussi appelé réseau principal.

Par ailleurs, l'ensemble de motorisation 5 comporte un moyen d'affichage 17 présentant pour les machines électriques 7 une indication divers paramètres de leur fonctionnement instantané dans des modes « moteur » ou « générateur ». L'ensemble de motorisation 5 est donc hybride.

A cette fin, l'organe de régulation 9 indique à un processeur d'affichage 18 du moyen d'affichage 17 s'il requiert le fonctionnement des machines électriques 7 en mode moteur ou en mode générateur. Ici, le moyen d'affichage 17 présente numériquement des informations de temps de fonctionnement en mode moteur ou mode générateur, d'emplacement, ou encore de code de couleur d'affichage numérique en fonction du mode de fonctionnement courant.

Selon cette réalisation, un premier moyen de mesure 19 usuel mesure le niveau de charge résiduel d'un dispositif 12 principal, e.g. d'une batterie principale 13. Ce niveau de charge résiduel est transmis au processeur d'affichage 18, et le processeur d'affichage 18 affiche sur un écran le niveau de charge résiduel pour le présenter au pilote de l'aéronef 1.

Sur la figure 2, le moyen d'affichage 17 présente un temps de fonctionnement restant pour les machines électriques 7, au moins un deuxième moyen de mesure 20 mesurant le temps de fonctionnement restant et transmettant ce temps de fonctionnement au processeur d'affichage 18.

Pour simplifier l'installation, le deuxième moyen de mesure 20 comporte le premier moyen de mesure 19 et l'organe de régulation 9, ce dernier déduisant en temps réel le temps de fonctionnement restant en fonction d'une part du niveau de charge du dispositif d'apport 12 des batteries principales 13-14 et, d'autre part, de la fourniture de puissance maximale des machines électriques 7.

Par ailleurs, un troisième moyen de mesure 21 couplé à la batterie principale 13 mesure la température de ce dispositif d'apport 12 et l'envoie au processeur d'affichage 18 pour son affichage sur un écran de visualisation inclus au moyen 17.

Pour aider le pilote, l'ensemble de motorisation 5 comporte sur la figure 2, un moyen d'alarme 22 muni d'un processeur d'alarme 23 générant une alarme (sonore et / ou visuelle) quand :
- le niveau de charge résiduel passe en dessous d'un niveau de charge seuil prédéterminé,
- le temps de fonctionnement restant passe en dessous d'un temps seuil prédéterminé, ou quand
- la température d'un ou plusieurs dispositifs 12, (e.g. les batteries 13-14) passe au dessus d'une température seuil prédéterminée.

Il est prévu une alarme intermédiaire, signalant au pilote que la température risque de dépasser ladite température seuil.

Pour activer ou arrêter les machines électriques 7, le pilote utilise un moyen de mise hors circuit 24 du dispositif 12. On verra que ces moyens prend la forme d'un contacteur 39 de mise en ligne /isolement, notamment sur les figures 1, 3-5.

Ce contacteur 39 de mise en ligne/isolement est à distinguer d'un autre contacteur 51 de clivage, dédié quant à lui à une ségrégation des réseaux 16 et 34, comme e.g. sur les figures 4 et 5.

Tant que le moteur à combustion 6 fonctionne normalement, à savoir en développant la puissance requise par ses spécifications, dans un mode de fonctionnement normal, les transmissions 8 (dont la boîte principale BTP et la boîte arrière BTA) sont entraînées uniquement par le moteur à combustion 6.

Par contre, si des organes mobiles du moteur à combustion 6 tournent à des vitesses proches ou égales à celles proscrites par le fabricant, ce moteur à combustion 6 est considéré en survitesse, ce qui risque de l'altérer. Des capteurs de vitesse 25 dédiés à cet effet transmettent une information de survitesse à l'organe de régulation 9, certains mesurant la vitesse de rotation desdits organes du moteur 6 d'autres mesurant la vitesse de rotation du rotor 3 c'est-à-dire de la voilure tournante.

Cette vitesse de rotation du rotor 3 est significative (nonobstant une roue libre 26 interposée entre la sortie du moteur 6 et l'entrée de la BTP ou boîte 8) de la vitesse de déplacement desdits organes mobiles du moteur à combustion 6. Dès lors, l'organe de régulation 9 déclenche un premier mode de survitesse et ordonne aux premier et deuxième machines électriques 7 de fonctionner en mode générateur pour tenter de ralentir le moteur à combustion 6.

Sur la figure 2, la boîte de transmission principale BTP est reliée mécaniquement au moteur à combustion 6 par un premier arbre de sortie 27, tandis que la transmission 8 est reliée à la boîte de transmission arrière BTA par un deuxième arbre 28 d'entrée / sortie. C'est sur cet arbre 27 qu'est agencée une deuxième machine électrique 7 formant démarreur / générateur 30. Dans cette réalisation, une deuxième machine 7 d'hybridation (31) et dite arrière est couplée sur l'arbre 28. Une réalisation prévoit aussi une machine électrique 7 d'hybridation (31) couplée à la boîte de transmission 8 formant BTP.

A l'issue d'une première durée prédéterminée, si le moteur à combustion 6 (parfois dit thermique) est toujours en survitesse, l'organe de régulation 9 ou un autre élément de l'aéronef 1 transmet l'information de survitesse au pilote. Le pilote arrête alors le moteur à combustion 6, e.g. via un robinet coupe feu apte à fermer l'alimentation en carburant fossile de ce moteur 6.

Il en résulte une chute de la vitesse de rotation du rotor 3 en dessous d'une première vitesse donnée et une chute de la vitesse de rotation du rotor anti-couple 4 en dessous d'une deuxième vitesse donnée. Or, l'organe de régulation 9 reçoit une information relative à cette vitesse de rotation du rotor 3 via un capteur 25, de fait à la vitesse de déplacement des organes mobiles du moteur à combustion 6, et à cette vitesse de rotation du rotor anti-couple 4.

Dès lors, lorsque la vitesse de rotation du rotor 3 passe en dessous de la première vitesse donnée et lorsque la vitesse de rotation du rotor anti-couple 4 passe en dessous de la deuxième vitesse donnée, l'organe de régulation 9 ordonne aux machines électriques auxiliaires 7 de fonctionner en mode moteur pour entraîner le rotor 3 et le rotor anti-couple 4 via les boîtes 8 de transmission principale BTP et arrière BTA. Pour ce faire, la loi de régulation a besoin de plus d'information que la vitesse de rotation du rotor 3, par exemple la dérivée de sa vitesse de rotation, ou encore d'autres paramètres propres à l'état instantané de l'aéronef 1, comme e.g. des paramètres de motorisation (6-7).

On a déjà évoqué un premier mode de survitesse. Maintenant, exposons des réalisations de modes typiquement de sous-vitesse et de secours.

Il est à noter qu'alors l'organe de régulation 9 ordonne :
- seulement à la première machine électrique 7 (démarreur 30) de participer à la motorisation durant un deuxième mode dit mode de sous-vitesse, pour entraîner le rotor principal 3 si la vitesse de rotation de ce rotor 3 passe en dessous d'une première vitesse donnée ;
- seulement à la deuxième machine électrique 7 (d'hybridation 31) de fonctionner en tant que moteur, durant un troisième mode également dit mode de sous-vitesse, pour entraîner le rotor anti-couple 4 si la vitesse de rotation de ce rotor 4 passe en dessous d'une deuxième vitesse donnée, et
- conjointement aux première et deuxième machines électriques 7 (démarreur 30 et d'hybridation 31), l'organe de régulation 9 ordonne de fonctionner en mode moteur durant un quatrième mode de sous-vitesse de secours, pour entraîner le rotor 3 et le rotor 4, quand la vitesse de rotation de ces rotors 3 et 4 passe respectivement en dessous de ladite première vitesse donnée et de ladite deuxième vitesse donnée.

Il faut garder en mémoire que si on est en mode secours tel que traditionnellement défini, on met à contribution l'ensemble des machines 7 électriques auxiliaires.

On note que la machine électrique 7 auxiliaire (d'hybridation 31), ainsi que le dispositif d'apport de charge 12 et l'organe de régulation 9 associés, sont ici électriquement indépendants des équipements 41 usuels d'un hélicoptère (moyen d'affichage 17, moyen d'alarme 22...), notamment de l'électronique de puissance et de commande du moteur à combustion 6 ainsi que du réseau électrique de bord 16. Dès lors, l'agencement de la figure 2 constitue un moyen de secours efficace en cas de dysfonctionnement voire de panne de ces équipements 41 (17, 22, etc.) classiques.

Au sein des machines électriques 7, celle qui forme démarreur 30 et celle qui sert de moteur auxiliaire 31 d'hybridation sont sur le réseau électrique de bord 16 (principal) et sur un réseau électrique 34 auxiliaire ou d'hybridation, respectivement.

Sur la figure 1 l'architecture électrique générale de génération et d'hybridation à bord de l'aéronef 1 selon l'invention, est désignée en 33.

Sur les figures 1 et 3 à 4, les liaisons à fonctionnalité primitivement mécanique entre certains constituants de l'ensemble de motorisation 5 de l'invention, sont représentées en trait triple. Celles qui sont d'ordre plus exclusivement électrique sont en trait simple. Notons que les liaisons primitivement mécaniques nécessitent fréquemment d'être doublées d'une liaison électrique entre commande et électronique de puissance par exemple.

Dans une réalisation avec deux machines 7 auxiliaires 31 proche de celle de la figure 4, on prévoit une barre de bus 36Aet une autre barre de bus 36B au sein du réseau 34. A l'instar de la figure 4, ceci permet une double alimentation. Dans une réalisation (non illustrée), où l'on n'aurait pas de double alimentation, il faudrait obligatoirement deux barres de bus (36A, 36B) auxiliaires s'il est requis d'assurer le même niveau de fonctions et de sécurité. Mettre deux machines 31 avec une seule barre auxiliaire et double alimentation pour les charges du réseau de bord (comme dans la réalisation représentée) peut par exemple correspondre à des contraintes conceptuelles en concurrence avec un bilan électrique ou une vision optionnelle.

Ainsi en est-il des liaisons entre la boîte de transmission 8 principale et le rotor de sustentation 3, entre cette boîte 8 et le moteur à combustion 6 ou chacune des machines électriques 7 (démarreur / générateur et d'hybridation / auxiliaire), ou encore entre la machine électrique 7 d'hybridation / auxiliaire 31 et un système de récupération cinétique 32 (figure 3). Il va de soi qu'en parallèle de certaines fonctionnalités mécaniques, des échanges d'ordre électrique participent de l'architecture électrique 33. Notons qu'en pointillés sur la figure 3, est illustrée une possibilité qui substitue au dispositif d'apport auxiliaire 12, un tel système de récupération cinétique 32, qui est simplement relié électriquement au sein du réseau 34 de l'ensemble 5 (c'est-à-dire sans sortie mécanique d'entrainement de la transmission 8).

Sur la figure 3, une réalisation montre en pointillés une alternative de système de récupération cinétique 32 (en pointillés) mis sur le réseau auxiliaire 34, en lieu et place de la batterie (qui alors confond 12 et 32).

Sur les figures 1 et 3 à 5 le réseau électrique de bord 16 possède au moins un bus électrique principal 35, tandis que sur le réseau électrique 34 auxiliaire, est agencé (au moins) un bus électrique auxiliaire 36, c'est-à-dire d'hybridation. Sur la figure 4 le réseau électrique de bord 16 possède deux bus électriques principaux 35A et 35B, reliés par un contacteur de clivage 51.

Lorsque comme sur la figure 5, le réseau électrique 34 auxiliaire comporte plusieurs bus électriques auxiliaires, ceux-ci sont désignés en 36A, 36B.

Sur la figure 5 on voit deux batteries auxiliaires 15, l'une sur une barre de bus 36A, l'autre sur une barre de bus 36B.

Sur la figure 3, un ensemble de motorisation hybride 5 est agencé pour entraîner une seule boîte de transmission 8 (BTP) qui est en prise sur un rotor 3 équipant l'aéronef à voilure tournante 1. Cet ensemble de motorisation 5 comporte évidemment un moteur à combustion 6 principal, sous forme d'un turbomoteur unique apte à entraîner la boîte de transmission 8 (BTP). Cet ensemble de motorisation hybride 5 est monomoteur, puisqu'il dispose seulement d'un moteur à combustion 6 unique. Ici aussi, une roue libre 26 est interposée entre la boîte de transmission 8 et le moteur à combustion 6, pour autoriser une autorotation en cas d'urgence, par découplage.

Sur la figure 3, l'aéronef 1 est typiquement léger, et son moteur (6) à combustion de type Diesel ou à turbine liée. D'autres réalisations prévoient des moteurs 6 à turbine libre.

Comme sur la figure 2, l'ensemble de motorisation hybride 5 de la figure 3 comprend une machine 7 formant démarreur / générateur électrique 30, qui est également en prise mécanique sur la boîte de transmission 8 (BTP) pour l'entraînement en rotation occasionnel de celle-ci. L'entraînement de la boîte de transmission 8 par cette machine électrique 7 formant démarreur 30 est susceptible d'intervenir isolément ou en appoint à son entraînement par le moteur à combustion 6.

Cette motorisation principale comportant le moteur à combustion 6 met en oeuvre la machine 7 formant démarreur /générateur 30 pour initier l'entraînement du moteur à combustion 6. Cette machine 7 nommée démarreur / générateur 30, est en outre agencée en générateur ou organe analogue apte à générer un courant approprié dont les caractéristiques sont en accord avec celles du réseau électrique auxiliaire 34.

Notons que le réseau électrique de bord 16 présente une tension nominale dite principale.

Selon une l'invention, l'ensemble de motorisation 5 hybride de l'aéronef 1 comporte au moins un réseau électrique auxiliaire 34, avec un ou des bus (36 ou 36A et 36B le cas échéant) qui fait partie d'un système d'hybridation 37.

Ce système d'hybridation 37, et plus spécialement le réseau électrique auxiliaire 34 et donc le bus électrique auxiliaire 36 dédié, sont sous une tension nominale dite auxiliaire. Selon l'invention, le bus électrique principal 35 (le cas échéant 35A, 35B) et le bus électrique auxiliaire 36 d'hybridation sont distincts, de sorte que le réseau électrique de bord 16 ou principal et le réseau électrique auxiliaire 34 sont dits électriquement séparés, c'est-à-dire distincts.

Du fait de cette séparation, sur les figures 1 et 3 à 5 est prévue une interface d'adaptation sélective 38 d'échanges d'énergie entre les réseaux électriques de bord 16 et auxiliaire 34. En effet, la tension nominale et / ou le type de phase (continu, alternatif monophasé, biphasé ou triphasé) peuvent et sont en général distincts entre les réseaux électriques de bord 16 et auxiliaire 34.

Dans les réalisations des figures 3 à 5, le réseau électrique de bord 16 est sous une tension nominale principale de 28V et sous un type de phase au principal continu (DC). Ces tension et type de phase sont distincts, c'est-à-dire différents, au sein du réseau électrique auxiliaire 34, avec dans cet exemple une tension nominale auxiliaire de l'ordre de 270 ou 540V. Le type de phase auxiliaire du courant nominal auxiliaire également continu (DC).

Lorsque le type de phase auxiliaire est différent au principal (16) et à l'auxiliaire (34), l'interface d'adaptation sélective d'échanges 38 d'énergie entre les réseaux électriques comporte au moins un convertisseur de phase, par exemple d'alternatif (AC) sur le réseau auxiliaire 34 vers du continu (DC) sur le réseau principal 16. Ce convertisseur de phase est le plus souvent réversible, et permet des échanges depuis le continu (DC) du réseau 16 vers l'alternatif (AC) sur le réseau auxiliaire 34. L'interface 38 peut donc opérer des conversions DC/AC et / ou AC/DC, en fonction des courants en présence.

Si tension nominale est distincte entre les réseaux électriques principal 16 et auxiliaire 34, le convertisseur de phase de l'interface d'adaptation sélective 38 forme transformateur de tension. En général, cette interface 38 est réversible, entre un sens d'échange d'énergie de fourniture de courant vers le réseau électrique de bord 16 (principal) et un sens d'échange d'énergie de fourniture de courant vers le réseau électrique auxiliaire 34. Donc, pour les valeurs de tension évoquées, l'interface 38 peut donc opérer des conversions de tension 270V ou 540V vers 28V et / ou de 28V vers 270V ou 540V. Dans les exemples qui suivent, on parlera de basse-tension et de haute-tension.

Dans les réalisations (par exemple de drône d'hélicoptère léger) où les tensions au principal et auxiliaire peuvent être identiques ou du moins compatibles, l'interface d'adaptation sélective 38 d'échanges d'énergie entre les réseaux électriques de bord 16 et auxiliaire 34 comporte simplement un ou plusieurs contacteurs de mise en ligne / isolement 39 qui font office de moyens de mise hors circuit 24.

Sur les figures 3 à 5, pour séparer les canaux de génération, un tel contacteur 39 est interposé, en parallèle du convertisseur de l'interface 38, entre la machine électrique 7 formant démarreur 30 et le bus électrique principal 35.

Bien sûr, un tel contacteur 39 n'est pas mis en place pour distinguer deux tensions ou types de phase. Les tensions et type de phases (entre les réseaux 16 et 34) sont les mêmes des deux cotés d'un contacteur 39 lorsqu'il est fermé

Comme ceci ressort des figures (1, 3-5) la machine 7 formant démarreur / générateur 30 est en prise mécanique sur le moteur à combustion 6 pour induire sa mise en rotation lors du démarrage de la motorisation principale de l'aéronef 1.

Alternativement la machine 7 formant démarreur / générateur 30 opère une prise mécanique sur le moteur à combustion 6, pour prélever de l'énergie mécanique à partir de la motorisation principale. Le prélèvement de cette énergie mécanique vise à générer un courant (e.g. basse-tension) d'alimentation en énergie :
- d'un dispositif d'apport de charge 12 (à batteries principales 13 ou 14, formant réserve d'énergie basse-tension) ; et / ou
- du réseau électrique de bord 16 (e.g. basse-tension).

La réserve d'énergie formée par le dispositif 12 est aussi classiquement destinée à alimenter en énergie le réseau électrique de bord 16 et la machine 7 formant démarreur / générateur 30, lorsque ce dernier entraîne le moteur à combustion 6 dans sa phase de démarrage.

Selon l'invention, comme ceci apparaît notamment à la figure 1, chaque dispositif 12 d'apport de charge, qu'il soit principal et / ou auxiliaire, comporte au choix au moins un jeu d'accumulateurs de type électrochimique et / ou de type capacitif et / ou de type cinétique (volant d'inertie). Ainsi, la batterie secondaire 15 possède à la fois des accumulateurs électrochimiques et capacitifs.

Le réseau électrique de bord 16 permet d'alimenter en énergie des équipements de bord 40 de l'aéronef à voilure tournante 1, des charges de secours 41 (c'est-à-dire un dispositif 12 auxiliaire, sur le ou les bus 35 -le cas échéant A, B- du réseau 16) ou autres organes électriques embarqués.

On comprend que les moyens d'affichage 17, les moyens de mesure 19 à 21, les moyens d'alarme 23 ou encore les capteurs 25 ou analogues, sont reliés au réseau principal 16 et sont à considérer comme des équipements 40.

D'autres des équipements 41 assument des fonctionnalités supplémentaires, par exemple fortes consommatrices d'énergie comme : dégivrage, treuillage, ventilation et conditionnement d'air, selon ce qui doit être intégré à l'aéronef 1. Ces équipements pour fonctionnalités supplémentaires sont schématiquement représentés en 41 sur les figures 3 à 5.

Le réseau principal 16 alimente les équipements 40 et les charges secours, (e.g. des voyants / alarmes / altimètres / liaisons radio / etc.). Les équipements 40 type dégivrage, treuillage, sont des charges normales.

Ceci étant posé, revenons au contacteur 39 de mise en ligne / isolement des moyens 24. Sur les figures 3-5, ce contacteur 39 interposé sur le réseau électrique principal 16, autorise ou interdit sélectivement le passage du courant (e.g. basse-tension) entre la machine 7 et le réseau électrique de bord 16

Sur les figures 3-5, l'ensemble de motorisation 5 met en oeuvre au sein du réseau électrique auxiliaire 34, la machine électrique 7 d'hybridation 31.

Cette machine 7 électrique 31 auxiliaire est agencée en (c'est-à-dire est capable d'agir en tant que) générateur de courant (e.g. haute-tension), mais est aussi nommée « moteur » du fait de sa possibilité d'intervenir sur la fonction d'hybridation. Ce moteur électrique d'hybridation (machine 31) intègre une électronique de puissance et de commande de son fonctionnement. La machine électrique 7 d'hybridation 31 (ou « moteur ») est en prise mécanique sur la boîte de transmission 8 (e.g. BTP), pour induire sa mise en rotation quand celle-ci est requise, en apport ou support à l'énergie mécanique fournie par le moteur à combustion 6 ou isolément e.g. en cas de panne du moteur à combustion 6 pour permettre au pilote de poser l'aéronef 1. La mise en rotation occasionnelle, avec l'intervention de la machine 7 ou « moteur » d'hybridation 31, de la boîte de transmission 8 est susceptible d'intervenir pour des commandes de vol particulières, tel que pour un démarrage « grand vent », ou pour assister le démarrage du moteur à combustion 6 en permettant de suppléer à un mécanisme d'embrayage mécanique, tel que par friction ou analogue.

Sur les figures 3-5, la machine électrique 7 formant générateur 30 est en prise sur la transmission 8, pour inversement prélever de l'énergie mécanique. Un tel prélèvement d'énergie mécanique permet à la machine électrique 7 / générateur 30 de générer du courant (e.g. haute-tension) et/ou de favoriser des commandes de vol, tel qu'un freinage du rotor 3. Le courant électrique (e.g. haute-tension) ainsi généré permet d'alimenter en énergie un dispositif d'apport de charge 12 auxiliaire de l'architecture électrique 33. Ce dispositif auxiliaire d'apport de charge 12 forme une réserve d'énergie. Lors d'une panne du moteur à combustion 6, la batterie principale (13) alimente les charges secours, et la batterie auxiliaire (15) alimente le moteur hybride formé par (au moins) une machine 7 auxiliaire 31.

Ce dispositif 12 (sur la figure 1 la batterie auxiliaire ou secondaire 15) de l'ensemble de motorisation hybride 5, est monté sur le réseau électrique auxiliaire 34. Ce dispositif 12 ou batterie secondaire 15 est notamment destinée à alimenter en énergie la machine 7 auxiliaire 31 dans sa fonction motrice, et le réseau électrique de bord 16 et / ou le dispositif 12 d'apport du réseau principal 16, évidemment par l'intermédiaire de l'interface 36 (avec convertisseur de courant dans les cas de tension / phases distincts entre réseaux 16 et 34, comme aux figures 3-5).

En se reportant à la figure 1, on voit que dans cette réalisation le réseau électrique auxiliaire 34 comprend un organe de régulation 9 ou module de contrôle et de pilotage. Cet organe 9 aussi appelé module de régulation, associe des moyens de contrôle 42 et des moyens de commande 43 du fonctionnement de l'ensemble de motorisation 5, et en particulier de l'architecture électrique 33 et de son système d'hybridation 37.

Ces moyens de contrôle 42 sont placés sous la dépendance de différents moyens 44 de mesure, d'analyse et de mémoire. Typiquement, des constituants de ces moyens 44 comportent des équivalents au processeur 10 et à sa mémoire 11, ainsi qu'aux premier à troisième moyens de mesure 19-21 déjà évoqués en regard de la figure 2.

Les moyens de mesure, d'analyse et de mémoire 44 permettent de détecter une défaillance du fonctionnement de l'ensemble de motorisation 5.

Dans la réalisation de la figure 1, les moyens électroniques 42 de contrôle sont associés à divers moyens 44 de mesure et de mémoire, qui comprennent l'un au moins des composants suivants:
- au moins un capteur de tension (aussi noté 19) de l'un au moins du réseau électrique principal 16 et / ou du réseau électrique auxiliaire 34, qui est associé à des moyens de comparaison entre la ou les tensions captées et au moins une tension de consigne. Par exemple, des tensions de consigne correspondent à des seuils respectifs de surtension ou de sous-tension de l'un et / ou l'autre du réseau électrique principal 16 et du réseau électrique auxiliaire 36. On prévoit sur le réseau 36, des capteurs de tension (19) sur au moins la machine 7 auxiliaire 31, le dispositif 12 de charge et l'interface 38, en particulier si elle comporte un convertisseur ;
- au moins un capteur de courant (lui aussi noté 19) de l'un au moins du réseau électrique principal 16 et / ou du réseau électrique auxiliaire 36, qui est associé à des moyens de comparaison entre le ou les courants captés et au moins un courant de consigne. Par exemple, des courants de consigne correspondent à des seuils respectifs de charges maximale et / ou minimale tolérées de l'une et / ou l'autre des dispositifs 12 formant réserve principale d'énergie et formant réserve auxiliaire d'énergie. Par exemple encore, un courant de consigne de sécurité correspond à un court-circuit dans l'un et / ou l'autre du réseau électrique principal 16 et du réseau électrique auxiliaire 36, pour provoquer la manoeuvre d'un ou de plusieurs coupe-circuits (e.g. 24, 39 ou 51) ;
- au moins un capteur de température (aussi noté 21) de l'un au moins du réseau électrique principal 16 et / ou du réseau électrique auxiliaire 36. Ce capteur de température (21) est associé à des moyens de comparaison entre la ou les températures captées et au moins une température de consigne, pour prévenir d'une éventuelle surchauffe de l'un au moins des dits constituants de l'ensemble 5 ;
- au moins un capteur 55 de la vitesse d'entraînement de l'un au moins du démarreur (30) et / ou du générateur d'hybridation (31). Ce capteur 55 de vitesse est associé à des moyens d'analyse de l'état de charge de l'un au moins des dispositifs 12 formant réserve d'énergie principale et / ou d'énergie auxiliaire. Pour un système de conservation d'énergie par inertie (32) susceptible de participer à l'alimentation de l'un ou l'autre au moins de ces dispositifs 12 de réserves d'énergie, un tel capteur 55 permet de connaître leur état de charge instantané ; et
- au moins un compteur (également désigné en 55) du nombre de cycle de recharge et de décharge de l'un au moins des dispositifs 12 formant réserve d'énergie principale et / ou d'énergie auxiliaire, associé à des moyens d'analyse de leur durée de vie. Ce capteur / compteur 55 est ici intégré aux moyens 20 de déduction du temps réel de fonctionnement.

Sur la figure 1, l'aéronef 1 comporte un groupe 56 auxiliaire de puissance (GAP, en anglais « Auxiliary Power Unit » ou APU ») à générateur auxiliaire. Ce groupe 56 auxiliaire de puissance est mécaniquement relié à ladite transmission 8 (e.g. BTP, BTA ou analogues) de l'ensemble 5 de motorisation hybride, de façon à être relié et à fournir de l'électricité au réseau 16 électrique de bord et / ou au réseau électrique 34 auxiliaire dans certaines phases de vol.

Par ailleurs, on voit sur la figure 2 que l'interface de pilotage 45 de l'aéronef à voilure tournante 1 est en relation avec l'organe / module de contrôle et de pilotage 9, pour permettre au pilote de commander le fonctionnement de l'ensemble de motorisation 5, en parallèle éventuellement de systèmes électronique de bord (e.g. régulateur numérique à pleine autorité FADEC, Pilote automatique, référencement d'attitude et avance AHRS, etc.). Une telle interface de pilotage 45 comprend notamment un pupitre de commande manuelle 46, un automate de commande de vol 47, et des moyens d'information 48 tels que des moyens d'alerte sonore et/ou visuelle, de l'état de fonctionnement de l'ensemble de motorisation 5. Cette interface de pilotage 45 est, nonobstant ses adaptations, liaisons et échanges avec le réseau électrique auxiliaire 34 et le système d'hybridation 37, généralement d'une structure classique au sein d'un réseau électrique de bord 16 c'est-à-dire principal d'un aéronef 1. D'ailleurs, on remarque sur la figure 1, d'une part une liaison électrique et logique 49 entre l'interface 45 et le réseau électrique auxiliaire 34 du système d'hybridation 37. D'autre part, on voit que cette interface 45 est électriquement reliée par la liaison électrique et logique 50 au réseau électrique de bord 16 de l'aéronef 1.

Les moyens d'information 48 comportent des moyens d'alerte sonore et/ou visuelle tels que les moyens d'alarme 22, ainsi que des moyens d'affichage 17, déjà évoqués en rapport avec la figure 2.

Diverses spécificités rendues possibles grâce à l'architecture électrique 33 du système d'hybridation 37, sont soulignées :
- La scission de l'ensemble 5 en deux réseaux et installations de motorisation élémentaires distincts, comportant chacun un générateur de courant et une réserve d'énergie propre, e.g. basse-tension pour la motorisation principale et haute-tension pour la motorisation auxiliaire sur les figures 3-5 ;
- La mise en relation de ces deux réseaux et installations de motorisation élémentaires pour une assistance mutuelle énergétique électrique entre elles ; et
- la motorisation indépendante ou combinée de la transmission 8 à partir du moteur à combustion 6 et / ou d'au moins une machine 7 auxiliaire.

Ceci permet entre autres :
- de fiabiliser et de sécuriser l'aéronef à voilure tournante 1, notamment dans le cas où celui-ci est monomoteur ;
- de procurer des fonctionnalités de pilotage spécifiques ; et
- qu'un l'aéronef à voilure tournante 1 monomoteur satisfasse aux règles de vol aux instruments (IFR Instrument Flight Rules en anglais, au niveau génération électrique évidemment. En effet, l'invention permet de rendre compatible la fourniture d'énergie électrique de l'aéronef 1 avec les objectifs de sécurité pour une utilisation d'un aéronef 1 monomoteur en mode IFR.

Selon un mode de fonctionnement de l'invention en « générateur de courant», l'ensemble 5 est exploité pour charger ou maintenir le niveau de charge des dispositifs 12 formant réserves d'énergie et / ou pour alimenter le réseau électrique de bord 16, voire le cas échéant pour dissiper par sécurité un surplus de courant (e.g. haute-tension) produit au moyen d'organes électriques consommateurs de courant 53 (figure 1) tels que des résistances dédiées ou autres organes électriques analogues.

Selon ce mode de fonctionnement, la machine 7 auxiliaire d'hybridation (aussi référencée en 31) fonctionnant en générateur et prélève de l'énergie mécanique à partir de la boîte de transmission 8. Les contacteurs 24, 39 sont en position fermée, et la machine 7 formant démarreur / générateur 31 alimente en énergie le réseau électrique de bord 16, et plus particulièrement alimente en énergie les équipements de bord 40 et le dispositif 12 du réseau 16 formant charges de secours.

On note ici que le système d'hybridation 37 comporte au moins un système 32 de récupération de l'énergie cinétique (SREC ou KERS pour « Kinetic Energy Recovery System » en anglais), qui est (mécaniquement et / ou électriquement) relié à la machine électrique 7 auxiliaire (31) pour récupérer une partie de l'énergie cinétique générée par ses décélérations. Ce système 32 de récupération est électriquement relié au réseau électrique auxiliaire 34 de manière à pouvoir alimenter, en retour, ladite machine électrique 7 auxiliaire (31) en cas de besoin.

Par ailleurs, la machine 7 d'hybridation 31 forme un auxiliaire susceptible d'alimenter en énergie le réseau électrique auxiliaire 34 pour le rechargement du dispositif 12 formant réserve d'énergie (e.g. haute-tension comme la batterie secondaire 15), notamment dans en cas de défaillance de la fonction génératrice de la machine 7 formant générateur principal 30. A cet effet, l'interface 38 du réseau 34 comporte un convertisseur 38 réversible et bidirectionnel.

Sur la figure 4, est en outre prévu un contacteur de clivage 51 qui est apte à autoriser sélectivement le passage du courant depuis le réseau électrique de bord 16 principal vers le réseau électrique 34 auxiliaire, en particulier par coupure de la liaison électrique entre les deux tronçons 35A et 35B du bus électrique principal 35, en amont du dispositif 12 d'apport.

Sur la figure 5, un contacteur de clivage 51 auxiliaire fait partie du réseau 34 éponyme. Ce contacteur 51 auxiliaire est apte à autoriser sélectivement le passage du courant depuis le réseau électrique de bord 16 principal ou depuis le réseau électrique 34 auxiliaire, en particulier par coupure de la liaison électrique entre les deux tronçons 36A et 36B du bus électrique auxiliaire 36, en amont du dispositif 12 d'apport auxiliaire formé ici par la batterie 15.

Selon cette réalisation, l'ensemble de motorisation 5 comporte une boîte de transmission principale (BTP) unique, deux machines électriques 7 auxiliaire 31 directement reliées à cette boîte. Ce système d'hybridation 37 est dit multicanaux du fait qu'il comporte au moins deux machines électriques 7 auxiliaires 31. Chaque canal du réseau auxiliaire 34 possède deux dispositifs d'apport 12 de charge auxiliaires, deux organes de régulation 9 (modules de contrôle) et aussi deux interfaces 38 d'adaptation sélectives. Deux batteries auxiliaires 15 sont aussi prévues ici. Bien sûr, l'exemple en question présente deux canaux, mais l'invention peut prévoir trois canaux ou encore plus.

Selon un mode de fonctionnement de l'invention en « générateur de courant économique », l'ensemble de motorisation 5 est exploité de manière à charger ou maintenir le niveau de charge des dispositifs 12 formant réserves d'énergie principales et / ou pour alimenter le réseau électrique de bord 16, voire le cas échéant pour dissiper par sécurité un surplus de courant produit.

Selon ce mode de fonctionnement, la machine 7 formant générateur 31 prélève de l'énergie mécanique à partir de la boîte de transmission 8. Tandis que l'autre machine 7 est hors fonctionnement, le contacteur principal des moyens 24 est en position ouverte et la machine électrique 7 formant générateur 31 alimente en énergie via l'interface 38 (et le contacteur de clivage 51 fermé), le réseau électrique de bord 16, et plus particulièrement alimente en énergie les équipements de bord 40 et le dispositif 12 de charge de secours à batterie secondaire 15. Aucune énergie mécanique n'est prélevée par la machine 7 (qui est alors hors ligne) à partir du moteur à combustion 6, ce qui permet d'améliorer ses performances.

Selon un mode de fonctionnement de l'invention en « alimentation électrique au sol », l'ensemble de motorisation 5 est alimentée en énergie à partir d'un groupe de parking 52, et / ou à partir de l'un au moins des dispositifs 12 formant réserves d'énergie à bord. Lorsque l'aéronef à voilure tournante 1 est au sol, les dispositifs 12 formant réserves d'énergies sont avantageusement chargés à partir du groupe de parking 52.

Selon un mode de fonctionnement de l'invention en « démarrage moteur(s) à combustion», l'ensemble 5 est exploité pour démarrer le moteur 6 de l'aéronef à voilure tournante 1. Pour cette opération, l'apport en énergie électrique est réalisé à partir du dispositif 12 formant réserve d'énergie du réseau de bord 16, et / ou à partir de la réserve d'énergie haute-tension 13, et/ou à partir du groupe de parking 52 équipant l'aéronef à voilure tournante 1. La machine 7 formant démarreur 30 entraîne si nécessaire le moteur à combustion 6 pour initier sa mise en rotation (et le cas échéant la compression des gaz d'une turbine) jusqu'à sa mise en fonctionnement autonome. Avant qu'il y ait un fonctionnement autonome, il faut que la machine 7 formant démarreur 30 ait fait son travail, même si elle est assistée par machine 7 d'hybridation.

Ici, l'aéronef 1 qui comporte en outre groupe 56 auxiliaire de puissance (GAP, en anglais « Auxiliary Power Unit » ou APU ») à générateur auxiliaire ; ce groupe auxiliaire de puissance est (mécaniquement et / ou électriquement) relié à ladite transmission (8) de l'ensemble (5) de motorisation hybride, de façon à être relié et à fournir de l'électricité au réseau (16) électrique de bord et / ou au réseau (34) électrique auxiliaire dans certaines phases de vol.

Selon un mode de fonctionnement de l'installation en « embrayage », le moteur à combustion 6 est mis en prise avec la boîte de transmission 8 dès lors que son entraînement atteint un seuil adapté de vitesse de rotation apte à entraîner le rotor 3. Plus particulièrement, le moteur 6 est désaccouplé de la boîte de transmission 8 pendant la phase de son démarrage, notamment au moyen d'une roue libre 26.

Dès lors, la machine électrique 7 formant moteur 31 est exploitée pour entraîner la transmission 8 à une vitesse supérieure à celle de rotation des éléments tournants du moteur 6 (i.e., axes de turbines, vilebrequins, etc.) en phase de démarrage et / ou en mode de fonctionnement au ralenti du moteur 6, de sorte que ce moteur à combustion est désaccouplé de cette transmission 8 par l'intermédiaire de la roue libre 26.

De fait, le moteur à combustion 6 peut démarrer avec un apport d'énergie juste suffisant pour son entraînement propre à partir de la machine 7 formant moteur 30 jusqu'à parvenir à sa vitesse de fonctionnement autonome. Une légère accélération imprimée au moteur à combustion 6 permet alors de l'accoster à la transmission 8 (e.g. la BTP) elle-même entraînée par ladite machine 7 formant moteur 31.

Selon un mode de fonctionnement de l'invention en « démarrage grand vent », la (ou les) machine(s) 7 formant moteur(s) 31 est (sont) exploitée(s) pour apporter de l'énergie mécanique complémentaire à l'énergie mécanique fournie par l'autre machine 7 formant démarreur 30, de sorte que l'entraînement de la boîte de transmission 8 à une vitesse adaptée à une situation de démarrage « grand vent » est obtenu le plus rapidement possible.

Selon un mode de fonctionnement de l'invention « freinage rotor », quand la (ou les) machine(s) 7 forme générateur(s) 31, elle(s) prélève de l'énergie mécanique à partir de la boîte de transmission 8. Ce prélèvement est susceptible d'être mis à profit pour le rechargement de l'un et / ou l'autre des dispositifs 12 formant réserves d'énergie, ou encore pour l'alimentation en énergie électrique du réseau électrique de bord 16. Une telle exploitation de l'énergie mécanique prélevée n'est pas indispensable, notamment dans le cas où les dispositifs 12 formant réserves d'énergie sont dans un état de charge optimal. Dans le cas où l'énergie mécanique prélevée pour freiner le(s) rotor(s) 3 (ou un / des rotor(s) annexe(s) génère un surplus d'énergie électrique, ce surplus est évacué par l'intermédiaire des dits organes électriques 53 dédiés à cette évacuation.

Selon un mode de fonctionnement de l'invention en « motorisation électrique », la transmission 8 est entraînée par la machine 7 qui forme alors moteur 31. Le réseau électrique auxiliaire 34 est alors configuré pour pouvoir fournir une quantité importante d'énergie pendant une courte durée, pour l'entraînement du ou des rotors 3 de sustentation. Cette énergie électrique ne peut alors être rendue disponible à partir de cette machine 7, celle-ci ne pouvant à la fois être en mode « générateur » et « moteur ».

Sur la figure 3 et la figure 4, des réalisations différentes de montage des constituants principaux de l'ensemble 5 sont représentées. En bref, la figure 3 représente un aéronef à voilure tournante 1 équipé d'une architecture électrique 33 selon l'invention, avec un ensemble de motorisation 5 monomoteur à combustion et une machine7 électrique d'hybridation (31). Quant à la figure 4, elle représente un aéronef à voilure tournante 1 selon cette réalisation l'invention, monomoteur (à combustion) et à deux machines 7 électriques d'hybridation 31, son réseau de bord 16 comportant deux (barres de) bus électrique 35A, 35B sécables par un commutateur de clivage 51, pour la séparation des réseaux 16 et 34. Avec au moins deux machines 4 d'hybridation (31), on prévoit deux canaux de génération (9 + 54) distincts au sein du réseau auxiliaire 34, mais le réseau « principal » 16 n'est pas forcément dédoublé avec deux bus 35A et 35B, comme sur la figure 4. Également, une machine 7 électrique d'hybridation unique peut tout à fait être prévue en cas de monomoteur à combustion (6).

Ces réalisation montrent un réseau principal (ici, basse-tension) 16 qui comprend des machines 7 formant démarreur 30 qui sont en prise mécanique avec le moteur 6 et qui sont en relation avec leur dispositif 12 formant réserve d'énergie par l'intermédiaire du contacteur principal des moyens 24.

Sur la figure 1, le réseau électrique 16, dont la tension nominale (principale) est de l'ordre de 28 V, est en relation par l'intermédiaire du bus électrique 35 (ou 35A, 35B) avec les équipements de bord 40 ou spéciaux 41, mais aussi avec le dispositif 12 formant charge électrique de secours et avec la connectique au groupe de parking 52 (le cas échéant, cf. figure 1). Le réseau auxiliaire 34 (ici, haute-tension) comprend la machine 7 formant générateur 31 qui est également en prise mécanique avec la transmission 8. Cette machine 7 formant générateur 31 est associée à une électronique de puissance 54 ici intégrée à l'organe de régulation 9.

Le réseau électrique auxiliaire 34, dont la tension nominale (auxiliaire) est de l'ordre de 270 V ou 540V (selon les modes de réalisation), est en relation via le bus auxiliaire 36 (ou 36A, 36B sur la figure 5) avec le dispositif 12 format réserve auxiliaire d'énergie, ici pourvu de la batterie secondaire 15.

Par ailleurs, ce réseau électrique auxiliaire 34 est relié au convertisseur de courant et plus généralement à l'interface 38, via le bus auxiliaire 36 pour lui permettre des échanges avec le réseau électrique principal 16.

Sur les figures 4 et 5, le réseau électrique principal 16 comporte deux bus électriques 35A et 35B qui sont sélectivement mis en relation l'un avec l'autre par l'intermédiaire du contacteur 51 alternativement apte à opérer leur clivage. Le premier bus électriques 35A du réseau électrique principal 16 est en relation avec le moteur 7 formant démarreur 30, avec le dispositif 12 formant réserve d'énergie principale (et le cas échant avec un groupe de parking 52).

Les équipements de bord 40 ou 41 et le dispositif 12 disposent d'une double alimentation, étant en relation par l'intermédiaire du second bus électrique 35B avec l'un et l'autre des réseaux électriques de l'architecture 33. Le réseau électrique principal 16 et le réseau électrique auxiliaire 34 sont ainsi techniquement dissociés ou ségrégués, lorsque le contacteur 51 opère leur clivage de par sa position ouverte.

Ainsi, les équipements 40, 41 de bord sont munis d'une double alimentation ou redondés, comme sur un aéronef à voilure tournante bimoteur. De fait, en mode Générateur, le système hybride 37 fournit si nécessaire de la puissance électrique au réseau de bord 16, s'il n'est pas utilisé en mode "motorisation électrique". Un avantage de cette architecture 33 à clivage entre les bus 35A et 35B, à savoir normalement distincts mais aptes à être couplés sélectivement, est qu'elle (33) participe à rendre compatible la fourniture d'énergie électrique au sein de l'aéronef 1, avec des objectifs accrus de sécurité, e.g. pour une utilisation d'un monomoteur en mode IFR.

De plus, les réseaux 16 et 34 étant technologiquement dissimilaires (conception, composants, fonctionnement et concepteurs différents), et en considérant le contacteur des moyens 24 ouvert, on démontre une indépendance de ces réseaux 16, 34 en mode "générateur de courant (économique)". Or, dans ce mode, le système hybride 37 peut prélever de la puissance mécanique à la boîte de transmission 8, ce qui peut être utile pour freiner cette transmission comme indiqué ci-dessus.

En outre, depuis le mode "générateur de courant économique", on doit imposer lors du passage (qui est possible) vers mode "motorisation électrique" ou sur perte du réseau 34 de génération hybride (e.g. panne de l'interface / du convertisseur bidirectionnel) que la reconfiguration réseau ait un comportement en ce qui concerne la machine 7 formant démarreur 30 et les moyens 24 (contacteur 39) conforme aux normes en vigueur normes vis-à-vis des charges alimentées (typiquement 50ms, d'après norme EN2282). Pour atteindre cette exigence, les moyens 24 doivent avoir leur contacteur 39 fermé en mode « générateur de courant économique ». Egalement, les modes de panne intéressants cités précédemment restent valables avec une pareille configuration.

Sur la figure 4, on note que la motorisation électrique d'hybridation comporte ici non pas un seul, mais plusieurs machines électriques 7 d'hybridation 31. Par suite, on dit l'ensemble de motorisation 5 de type « multicanaux » puisque comportant (au moins) deux machines électriques 7 d'hybridation 31, chacune reliée à au moins un dispositif 12 d'apport auxiliaire de charge via le réseau électrique auxiliaire 34. Dans un tel système 37, les diverses machines électriques 7 d'hybridation 31 sont toutes mécaniquement couplés à la boîte de transmission 8, directement.

Un tel ensemble 5 multicanaux présente l'avantage de permettre une montée en charge progressive de la fourniture de puissance mécanique par le système hybride ou d'hybridation 37 vers la boîte de transmission 8, ou à l'inverse, de collecte de puissance mécanique par ce système d'hybridation 37 depuis la boîte de transmission 8, selon qu'un, deux ou plusieurs machines électriques 7 d'hybridation 31 sont activées par l'organe de régulation 9.

En particulier pour les aéronefs 1 à moteurs à combustion 6 multiples, il peut être pratique d'installer deux chaînes d'hybridation, comme évoqué. Ceci permet par exemple de dédier un canal ou « chaîne » à l'alimentation électrique d'un équipement 41 à forte consommation, tel qu'un dégivrage de pales rotor. Ceci sans pour autant priver l'aéronef 1 de ses ressources d'hybridation, par exemple dans certaines phases de vol (qui d'ailleurs comme au décollage, peuvent solliciter un surplus d'énergie électrique ou motrice). Hors hybridation, ces chaînes d'hybridation peuvent être délestées ou employées comme source de secours - en cas de panne de la machine 7/30 mais avec le moteur à combustion 6 restant opérationnel - à l'usage du système de commande de vol de l'aéronef 1, par exemple. Dès lors, on considère l'aéronef 1 comme pourvu de quatre sources électriques indépendantes.

En se reportant maintenant aux figures 5 et 6, on voit comment l'invention s'applique à un aéronef à voilure tournante 1 ayant une motorisation bimoteur (deux moteurs à combustion 6). Ici, l'aéronef 1 possède une machine électrique 7 d'hybridation (31) unique, mais des réalisations de l'invention comportent des bimoteurs (à combustion) avec une motorisation électrique d'hybridation de type multicanaux. Notons qu'à l'instar de la figure 3, cette machine électrique 7 d'hybridation 31 est couplée à un système de récupération cinétique 32.

Sur la figure 6 on voit schématiquement un détail de l'architecture électrique 33 du mode de réalisation de l'invention illustré plus généralement à la figure 5. Dans cet aéronef 1, l'électronique de puissance 54 d'une part une machine électrique 7 formant démarreur / générateur 31, et d'autre part d'un dispositif d'apport 12 (ici à batterie secondaire 15) du système d'hybridation 37 sont couplées à une interface d'adaptation 38 formant un module de gestion de la puissance électrique (de cette machine 7 et dudit dispositif 12), ainsi qu'à un organe de régulation 9 formant une unité de commande et de contrôle de l'ensemble 5 de motorisation hybride de l'aéronef 1.

D'une part, l'organe 9 formant unité de commande est en liaison logique avec le réseau de bord 16 de l'aéronef 1 pour notamment recevoir des instructions depuis le pupitre de commande 46. Quant à l'interface 38 module de gestion, elle est électriquement reliée, de manière séparable, avec le réseau électrique auxiliaire 34, via le bus électrique auxiliaire 36.

Avec une telle architecture 33, l'invention permet la fourniture momentanée (i.e. sur une durée limitée) de puissance mécanique et / ou électrique à une ressource la nécessitant, telle qu'un moteur à combustion 6 ou machine électrique 7. Ou encore, l'invention permet de fournir de la puissance électrique à des équipements tels que 40 ou 41, à partir d'une charge en énergie emmagasinée préalablement (sous forme cinétique et / ou électrique).

Un tel système hybride 37 prévoit notamment deux familles de modes de fonctionnement, à savoir « d'attente » et « d'assistance à la motorisation », qui ne peuvent en aucun cas être simultanés. Grâce à l'organe 9 formant unité de commande, la quantité d'énergie disponible est constamment mesurée, de sorte que son emploi est ajusté en temps réel. Dès qu'il est possible de prélever de l'énergie (mécanique) ceci est effectué, dès qu'une ressource nécessite un apport de puissance mécanique ou électrique au sein de l'aéronef 1, l'organe 9 formant unité de commande se charge de sa distribution vers la ressource en demande.

De ce qui précède, on comprend maintenant comment l'invention parvient à résoudre les divers problèmes techniques déjà exposés.

L'invention s'avère aisée à adapter sur de nombreux modèles d'aéronefs sans compliquer ou alourdir l'architecture électrique alentours (hors adjonctions hybridation). Ceci peut être proposé à titre d'option.

Il est possible grâce à l'invention d'uniformiser les architectures 33 et de leurs constituants, entre modèles d'une même gamme d'aéronef 1 et entre les différentes gammes d'un même constructeur. Notamment, du fait de la ségrégation et de la possibilité de concevoir des hybridations optionnelles, les systèmes d'hybridation 37 selon l'invention peuvent être relativement proches structurellement, d'un modèle à l'autre.

Paradoxalement, un aéronef 1 selon l'invention peut s'avérer à profil de mission égal, étonnement simplifiée et allégé. On a également vu que des améliorations de sécurité et fiabilité sont atteintes par l'invention.

En cas de perte du ou des moteurs à combustion, une procédure d'autorotation peut être enclenchée, nécessitant la pleine disponibilité du système hybride 37 en mode « moteur », à l'exclusion bien sûr de toute génération de courant par ce système 37.

La quantité d'énergie disponible à bord de l'aéronef 1 aux moments requis et ce de manière renouvelable est optimisée par l'invention. Des fonctionnalités supplémentaires, fortes consommatrices d'énergie comme dégivrage, treuillage, ventilation et conditionnement d'air, sont possible à intégrer un aéronef 1 selon l'invention. Sans pour autant, surcharger le moteur 7 formant démarreur / générateur 30, couplé à la transmission de motorisation.

A profil de mission global donné, il est possible selon l'invention de réaliser des gains de consommation d'énergie, et ainsi de satisfaire à de futures implications écologiques et de nouvelles réglementations.

Selon l'invention, l'adjonction en option ou en série d'une hybridation est possible même si le modèle concerné d'aéronef 1 est déjà proche de sa limite de masse autorisée.

En conclusion on comprend que l'invention offre une hybridation ayant un impact favorable en termes de performance (notamment pour un aéronef à motorisation multiple tel qu'un bimoteur), ou en termes de sécurité (notamment pour un aéronef à motorisation unique tel qu'un monomoteur).

## Revendications

1. Aéronef (1) à voilure tournante, qui comporte un réseau (16) électrique de bord et au moins : un ensemble (5) de motorisation avec au moins un rotor (3, 4) à entraîner en rotation, au moins une transmission (8) d'entraînement en rotation dudit rotor (3, 4) ; au moins un ensemble (5) de motorisation de l'aéronef (1) est hybride, et associe au moins un moteur (6) à combustion dit principal à au moins une machine électrique (7) auxiliaire d'hybridation (31) ; le moteur (6) à combustion principal et la machine électrique (7) auxiliaire étant mécaniquement couplés à la transmission (8) ; ladite machine électrique (7) auxiliaire étant placée au sein de l'ensemble (5) de motorisation hybride en constituant alternativement un organe d'entraînement mécanique de la transmission (8) ou un organe générateur de courant sous l'effet de son entraînement mécanique par ladite transmission (8) ; le réseau (16) électrique de bord possède au moins un bus électrique (35 ; 35A-35B) principal sous une tension nominale principale ; sur le bus électrique principal sont montés au moins un dispositif (12) d'apport de charge électrique principal, avec au moins une batterie principale d'accumulateurs (13, 14), et une machine électrique (7) formant démarreur (30), réversible en générateur, cette machine (7) formant démarreur (30) étant
mécaniquement reliée audit moteur (6) à combustion,
**caractérisé en ce que** l'ensemble (5) de motorisation hybride de l'aéronef (1) comporte au moins un système d'hybridation (37) avec au moins un réseau (34) électrique auxiliaire pour l'hybridation, qui possède un bus électrique auxiliaire (36 ; 36A36B) dédié auquel est électriquement connectée ladite machine électrique auxiliaire (7,31), sous une tension nominale auxiliaire ; le bus électrique principal et le bus électrique auxiliaire d'hybridation étant reliés par au moins une interface d'adaptation sélective (38), de sorte que le réseau (16) de bord principal et le réseau (34) auxiliaire sont électriquement distinctibles.

2. Aéronef (1) selon la revendication 1,
**caractérisé en ce que** la machine (7) formant démarreur (30) est électriquement montée sur le réseau principal (16), par l'intermédiaire de moyens de mise hors circuit (24) d'un dispositif (12) d'apport de charge dit principal au sein du réseau (16) principal ; tandis que sont connectés électriquement sur le bus électrique auxiliaire (36), d'une part un organe (9) ou module de contrôle et pilotage ainsi que ladite machine (7) auxiliaire (31), et d'autre part au moins une interface (38) d'adaptation sélective agencée pour sélectivement permettre, par connexion sélective au réseau électrique principal, des échanges d'énergie électrique entre les réseaux électriques principal (16) et auxiliaire (34).

3. Aéronef (1) selon la revendication 1 ou 2,
**caractérisé en ce que** ladite machine (7) auxiliaire (31) qui est mécaniquement reliée à ladite transmission (8), est électriquement connectée au bus (36 ; 36A-36B) électrique auxiliaire, en parallèle d'au moins un dispositif (12) d'apport de charge électrique dit auxiliaire, avec au moins une batterie secondaire (15) d'accumulateurs ; ce dispositif (12) d'apport auxiliaire, l'organe (9) de contrôle, la machine (7) auxiliaire (31), le réseau (34) auxiliaire et l'interface (38) d'adaptation sélective faisant partie du système d'hybridation (37).

4. Aéronef (1) selon l'une des revendications 1 à 3,
**caractérisé en ce que** l'ensemble (5) de motorisation comporte une boîte de transmission (8) principale (BTP) unique, mécaniquement reliée à au moins un rotor (3) de sustentation de l'aéronef (1) et à un moteur (6) à combustion unique, tel qu'un turbomoteur ou moteur diesel ; au moins une machine électrique (7) auxiliaire (31) étant reliée à cette boîte.

5. Aéronef (1) selon la revendication 4,
**caractérisé en ce que** l'ensemble (5) de motorisation comporte une boîte de transmission (8) principale (BTP) unique, et au moins deux machines électriques auxiliaires reliées à cette boîte.

6. Aéronef (1) selon l'une des revendications 1 à 3,
**caractérisé en ce que** l'ensemble (5) de motorisation comporte une boîte de transmission (8) principale (BTP) unique, mécaniquement reliée à au moins un rotor (3) de sustentation de l'aéronef (1) et à plusieurs moteurs (6) à combustion, tel que deux turbomoteurs ou moteurs diesel ; au moins une machine électrique (7) auxiliaire (31) étant reliée à cette boîte.

7. Aéronef (1) selon l'une des revendications 1 à 3,
**caractérisé en ce que** l'ensemble (5) de motorisation comporte au moins une boîte de transmission (8) auxiliaire (BTA), mécaniquement reliée à au moins un rotor (4) auxiliaire, tel que rotor(s) anti-couple et / ou rotor(s) propulseur d'au moins un agencement latéral à hélices d'aéronef (1) à voilure tournante rapide à longue portée ; au moins une machine (7) électrique auxiliaire (31) étant reliée à cette boîte.

8. Aéronef (1) selon l'une des revendications 1 à 7,
**caractérisé en ce qu'**au moins un contacteur (39) de clivage est agencé dans le système (37) d'hybridation entre deux bus principaux (35A ; 35B) et / ou auxiliaires (36A ; 36B).

9. Aéronef (1) selon l'une des revendications 1 à 8,
**caractérisé en ce que** le réseau (16) électrique de bord est sous une tension nominale principale et / ou d'un type de phase au principal distincts respectivement d'une tension nominale auxiliaire et / ou et/ou d'un type de phase auxiliaire d'un courant nominal du réseau (34) électrique auxiliaire ; dès lors l'interface (38) comporte au moins un convertisseur de phase.

10. Aéronef (1) selon la revendication 9,
**caractérisé en ce que** la tension nominale et/ type de phase sont distincts entre les réseaux électriques (16 ; 34) principal et auxiliaire, au moins un convertisseur de phase de l'interface d'adaptation (38) sélective d'échanges est réversible, entre un sens d'échange d'énergie de fourniture de courant vers le réseau principal (16) et un sens d'échange d'énergie de fourniture de courant vers le réseau (34) électrique auxiliaire.

11. Aéronef (1) selon l'une des revendications 1 à 10,
**caractérisé en ce qu'**au moins un dispositif 12) d'apport de charge, principal et / ou auxiliaire, est de type électrochimique et / ou capacitif et / ou cinétique.

12. Aéronef (1) selon l'une des revendications 1 à 11,
**caractérisé en ce que** le système d'hybridation (37) est multicanaux et comporte au moins deux machines électriques (7) d'hybridatïon, chacune avec en commun au moins un dispositif (12) d'apport de charge auxiliaire et / ou un organe ou module de contrôle (9 ; 54) et / ou une interface d'adaptation sélective (38).

13. Aéronef (1) selon l'une des revendications 1 à 12,
**caractérisé en ce que** le système d'hybridation est dit multicanaux et comporte au moins deux machines (7) électriques auxiliaires, chaque canal ayant au moins un dispositif d'apport de charge auxiliaire (12, 15) et / ou un module de contrôle (9) et / ou une interface d'adaptation sélective (38) propres.

14. Aéronef (1) selon l'une des revendications 1 à 12,
**caractérisé en ce que** l'ensemble (5) de motorisation hybride comprend au moins un moteur (6) à combustion principal sous forme de turbomoteur couplé à une machine (7) formant démarreur (30), réversible en générateur, en prise mécanique sur le turbomoteur et placé sur un réseau électrique (16) principal sous basse-tension ; un système d'hybridation (37) comportant au moins un machine électrique (7) auxiliaire (31) sous forme de moteur électrique / générateur de courant haute-tension, ce moteur électrique auxiliaire (31) étant en prise mécanique sur la transmission (8) et étant placé sur le réseau (34) électrique auxiliaire sous haute-tension dudit système d'hybridation (37).

15. Aéronef (1) selon l'une des revendications 1 à 14,
**caractérisé en ce que** l'ensemble (5) de motorisation hybride comprend des moyens (43) électroniques de commande de la mise en oeuvre du ou des moteurs (6) à combustion principaux et / ou du ou des moteurs (7) électriques auxiliaires (31), lesdits moyens (43) étant en relation avec l'un au moins d'un pupitre (46) de commande manuelle et / ou d'un automate (47) de commande de vol de l'ensemble (5) de motorisation hybride et reliés ainsi qu'alimentés via le réseau (34) électrique principal.

16. Aéronef (1) selon l'une des revendications 1 à 15,
**caractérisé en ce que** l'ensemble (5) de motorisation hybride comprend des moyens (42) électroniques de contrôle de l'état et du fonctionnement du ou des moteurs (6) à combustion principaux et / ou de la ou des machines (7) électriques auxiliaires (31), ces moyens (42) de contrôle étant reliés ainsi qu'alimentés via le réseau (16) électrique principal.

17. Aéronef (1) selon la revendication 16,
**caractérisé en ce que** les moyens (42) de contrôle sont en relation avec des moyens d'information (48) de l'état et du fonctionnement du ou des moteurs à combustion (6) principaux et / ou du ou des machines électriques (7) auxiliaires, ces moyens électroniques de contrôle étant reliés ainsi qu'alimentés via le réseau (16) électrique principal.

18. Aéronef (1) selon l'une des revendications 1 à 17,
**caractérisé en ce que** l'aéronef (1) comporte un groupe (56) auxiliaire de puissance à générateur auxiliaire ; ce groupe (56) auxiliaire de puissance est mécaniquement relié à ladite transmission (8) de l'ensemble (5) de motorisation hybride, de façon être relié et à fournir de l'électricité au réseau (16) électrique de bord et / ou au réseau (34) électrique auxiliaire dans certaines phases de vol.

19. Aéronef (1) selon l'une des revendications 1 à 18,
**caractérisé en ce que** les moyens (42) électroniques de contrôle sont associés à des moyens (44) de mesure, d'analyse et de mémoire, qui comprennent l'un au moins des constituants suivants :
- un capteur (19) de tension de l'un au moins du réseau électrique principal et / ou du réseau (34) électrique auxiliaire, ledit capteur de tension étant associé à des moyens de comparaison entre la ou les tensions captées et au moins une tension de consigne ;
- un capteur (19) de courant de l'un au moins du réseau électrique principal et / ou du réseau (34) électrique auxiliaire, ledit capteur de courant étant associé à des moyens de comparaison entre le ou les courants captés et au moins un courant de consigne ;
- un capteur (21) de température l'un au moins du réseau électrique principal et / ou du réseau (34) électrique auxiliaire, ce capteur de température étant associé à des moyens de comparaison entre la ou les températures captées et au moins une température de consigne ;
- des moyens d'analyse de l'état de charge d'au moins un dispositif d'apport de charge du réseau (16) électrique de bord principal et / ou auxiliaire ;
- un capteur de vitesse (25) de rotation d'un au moins des : moteur(s) à combustion, (6) et / ou machine électrique (7 ; 30-31) et / ou transmission (8) ; et
- un compteur (20) du nombre de cycles de recharge et de décharge d'au moins un dispositif d'apport de charge du réseau (16) électrique de bord principal et / ou auxiliaire, ledit compteur de cycles étant associé à des moyens d'analyse (44) de la durée de vie du ou des dispositifs d'apport de charge.

20. Aéronef (1) selon l'une des revendications 1 à 19,
**caractérisé en ce que** le système d'hybridation (37) comporte au moins un système (32) de récupération de l'énergie cinétique (SREC) mécaniquement ou électriquement relié à au moins une machine (7) électrique auxiliaire (31) pour récupérer une partie de l'énergie cinétique générée par ses décélérations et électriquement relié au réseau (34) électrique auxiliaire de manière à pouvoir alimenter en retour cette machine (7) électrique auxiliaire (31) en cas de besoin.

21. Aéronef (1) selon l'une des revendications 1 à 20,
**caractérisé en ce que** dans le cas d'un ensemble de motorisation (5) pourvu d'au moins un système (32) de récupération cinétique, un capteur de vitesse (25) est couplé à ce système (32) de manière à en déterminer la vitesse de rotation instantanée, ce capteur de vitesse étant par exemple intégré à des moyens (44) de mesure, d'analyse et de mémoire.

22. Procédé de mise en oeuvre d'un aéronef (1) selon l'une des revendications 1 à 21,
**caractérisé en ce que** ce procédé prévoit :
- en phase de démarrage du moteur (6) à combustion 6, d'initier ce démarrage à partir du démarreur alimenté via le réseau (34) électrique auxiliaire : ceci s'applique notamment dans le cas d'un moteur (6) à combustion ;
- en phase de vol, d'entraîner la transmission (8) par ledit moteur (6) à combustion en mode de fonctionnement autonome ; et
- en phase de vol et pour un apport d'énergie mécanique occasionnel à la transmission, d'entraîner cette dernière (8) à partir d'une machine (7) électrique auxiliaire (31) agencée en moteur et alimentée par au moins un dispositif (12) d'apport de charge du réseau (16) électrique principal, en complément de l'entraînement de la transmission par le moteur (6) à combustion pour des commandes de vol spécifiques et / ou en substitution de l'entraînement de la transmission par ledit moteur (6) à combustion en cas de défaillance de ce dernier (6).

23. Procédé selon la revendication 22,
**caractérisé en ce que** ce procédé prévoit d'alimenter le réseau (16) électrique de bord à partir du réseau (34) électrique auxiliaire, par l'intermédiaire de l'interface (38) d'adaptation sélective, pour le cas échéant :
- suppléer à une éventuelle défaillance de l'un au moins : du dispositif (12) d'apport de charge du réseau électrique principal et / ou d'une machine (7) électrique (30) réversible ; et / ou
- soulager le moteur (6) à combustion de l'entraînement de la machine (7) électrique (30) réversible.

24. Procédé selon la revendication 22 ou 23,
**caractérisé en ce que** ce procédé prévoit :
- en phase de démarrage du moteur (6) à combustion, un entraînement de la transmission par une machine (7) électrique auxiliaire (31) à une vitesse de consigne supérieure à celle assignée alors à l'entraînement du moteur (6) à combustion par la machine (7) électrique formant démarreur (30) réversible, pour désaccoupler le moteur (6) à combustion de ladite transmission (8) ;
- une mise au ralenti du moteur (6) à combustion, en mode de fonctionnement autonome de ce moteur (6) à combustion ; et
- un accouplement par accostage du moteur (6) à combustion avec la transmission (8), à partir d'une accélération progressive du moteur (6) à combustion, jusqu'à une vitesse correspondant à celle d'entraînement de la transmission par ladite machine (7) électrique auxiliaire, via une roue libre ou analogues ; cette roue libre entre moteur à combustion (6) et transmission (8), opérant leur désaccouplement.

25. Procédé selon l'une des revendications 22 à 24,
**caractérisé en ce que** ce procédé prévoit qu'en phase de vol et au sol, on prélève de l'énergie mécanique à partir de la transmission (8) par le moteur électrique auxiliaire pour provoquer un freinage dudit rotor (3 ; 4) relié à cette transmission.

26. Procédé selon l'une des revendications 22 à 25,
**caractérisé en ce que** ce procédé prévoit un fonctionnement dédoublé de réplication d'alimentation des dispositifs (12) d'apport auxiliaire de charge électrique, par exemple pour rendre la fourniture d'énergie électrique aux équipements (40 ; 41) redondante et par exemple compatible en tout territoire avec un vol aux instruments.

27. Procédé selon l'une des revendications 22 à 26,
**caractérisé en ce que** des moyens d'affichage (17) procurent à partir de données fournies par ces moyens (44) de mesure, d'analyse et de mémoire, une information représentative d'une valeur de temps d'usage de la machine électrique d'hybridation restant disponible à puissance maximale ; cette valeur de temps d'usage étant prise en compte à partir d'un état de charge instantané de ladite machine électrique (7) et de la première puissance que cette machine (7) est à-même de délivrer à l'instant donné, par exemple cette première puissance est une puissance maximale.

## Patentansprüche

1. Drehflügel-Luftfahrzeug (1), welches ein elektrisches Bordnetz (16) aufweist und mindestens: eine Antriebsgruppe (5) mit mindestens einem Rotor (3, 4), der in eine Drehbewegung zu versetzen ist, mindestens ein Getriebe (8) zum Antreiben des Rotors (3, 4) zu einer Drehbewegung, wobei mindestens eine Antriebsgruppe (5) des Luftfahrzeugs (1) eine Hybrid-Antriebsgruppe ist und mindestens einen Hauptverbrennungsmotor genannten Verbrennungsmotor (6) mit mindestens einer elektrischen Hybrid-Hilfsmaschine (7, 31) verbindet, wobei der Hauptverbrennungsmotor (6) und die elektrische Hilfsmaschine (7) mechanisch an das Getriebe (8) gekoppelt sind, wobei die elektrische Hilfsmaschine (7) an der Hybrid-Antriebsgruppe (5) angeordnet ist und alternativ ein mechanisches Antriebsorgan des Getriebes (8) oder ein Stromerzeugungsorgan bei ihrem mechanischen Antrieb durch das Getriebe (8) bildet, wobei das elektrische Bordnetz (16) mindestens einen elektrischen Hauptbus (35; 35A-35B) aufweist, der unter einer nominalen Hauptspannung steht, wobei auf dem elektrischen Hauptbus mindestens eine Hauptvorrichtung (12) zur Lieferung elektrischer Ladung, mit mindestens einer Hauptakkumulatorbatterie (13, 14), und eine elektrische Maschine (7), die einen Starter (30) bildet, der in einen Generator umwandelbar ist, montiert sind, wobei diese Maschine (7), die den Starter (30) bildet, mechanisch mit dem Verbrennungsmotor (6) verbunden ist,
**dadurch gekennzeichnet, dass** die Hybrid-Antriebsgruppe (5) des Luftfahrzeugs (1) mindestens ein Hybridsystem (37) mit mindestens einem elektrischen Hilfsnetz (43) für die Hybridisierung aufweist, das einen elektrischen Hilfsbus (36; 36A-36B) besitzt, mit dem die elektrische Hilfsmaschine (7, 31), die unter einer nominalen Hilfsspannung steht, elektrisch verbunden ist, wobei der elektrische Hauptbus und der elektrische Hybridisierungs-Hilfsbus über mindestens eine selektive Adaptationsschnittstelle (38) derart verbunden sind, dass das Hauptnetz (16) und das Hilfsnetz (34) elektrisch trennbar sind.

2. Luftfahrzeug (1) nach Anspruch 1,
**dadurch gekennzeichnet, dass** die Maschine (7), die den Starter (30) bildet, elektrisch in dem Hauptnetz (16) verschaltet ist über Trennschaltermittel (24) einer Vorrichtung (12) zur Lieferung von Ladung, die Hauptvorrichtung genannt wird und im Hauptnetz (16) angeordnet ist, während auf dem elektrischen Hilfsbus (36) einerseits ein Überwachungs- und Steuerungsorgan (9) oder -modul sowie die Hilfsmaschine (7, 31), und andererseits mindestens eine selektive Adaptationsschnittstelle (38), die vorgesehen ist, um selektiv elektrische Energieaustauschvorgänge zwischen dem elektrischen Hauptnetz (16) und dem elektrischen Hilfsnetz (34) durch selektive Verbindung mit dem elektrischen Hauptnetz zu erlauben, elektrisch verbunden sind.

3. Luftfahrzeug (1) nach Anspruch 1 oder 2,
**dadurch gekennzeichnet, dass** die Hilfsmaschine (7, 31), die mechanisch mit dem Getriebe (8) verbunden ist, elektrisch mit dem elektrischen Hilfsbus (36; 36A-36B) parallel zu mindestens einer Vorrichtung (12) zur Lieferung elektrischer Ladung, die Hilfsvorrichtung genannt wird, die mindestens eine Sekundärbatterie (15) von Akkumulatoren aufweist, verbunden ist, wobei die Hilfsvorrichtung (12) zur Lieferung von Ladung, das Überwachungsorgan (9), die Hilfsmaschine (7, 31), das Hilfsnetz (34) und die selektive Adaptationsschnittstelle (38) Teil des Hybridsystems (37) sind.

4. Luftfahrzeug (1) nach einem der Ansprüche 1 bis 9,
**dadurch gekennzeichnet, dass** die Antriebsgruppe (5) ein einziges Hauptgetriebe (8, BTP) aufweist, das mechanisch mit mindestens einem Haupttragrotor (3) des Luftfahrzeugs (1) und mit einem einzigen Verbrennungsmotor (5), wie einem Turbomotor oder einem Dieselmotor, verbunden ist, wobei mindestens eine elektrische Hilfsmaschine (7, 31) mit diesem Getriebe verbunden ist.

5. Luftfahrzeug (1) nach Anspruch 4,
**dadurch gekennzeichnet, dass** die Antriebsgruppe (5) ein einziges Hauptgetriebe (8, BTP) und mindestens zwei elektrische Hilfsmaschinen aufweist, die mit dem Getriebe verbunden sind.

6. Luftfahrzeug (1) nach einem der Ansprüche 1 bis 3,
**dadurch gekennzeichnet, dass** die Antriebsgruppe (5) ein einziges Hauptgetriebe (8, BTP) aufweist, das mechanisch mit mindestens einem Tragrotor (3) des Luftfahrzeugs (1) und mit mehreren Verbrennungsmotoren (6), wie zwei Turbomotoren oder Dieselmotoren, verbunden ist, wobei mindestens eine elektrische Hilfsmaschine (7, 31) mit dem Getriebe verbunden ist.

7. Luftfahrzeug (1) nach einem der Ansprüche 1 bis 3,
**dadurch gekennzeichnet, dass** die Antriebsgruppe (5) mindestens ein Hilfsgetriebe (8, BTA) aufweist, das mechanisch mit mindestens einem Hilfsrotor (4), wie einem oder mehreren Drehmoment-Ausgleichsrotor(en) und/oder einem oder mehreren Vortriebsrotor(en), mindestens einer seitlichen Anordnung von Propellern des schnellen Drehflügel-Luftfahrzeugs (1) mit großer Reichweite mechanisch verbunden ist, wobei mindestens eine elektrische Hilfsmaschine (7, 31) mit diesem Getriebe verbunden ist.

8. Luftfahrzeug (1) nach einem der Ansprüche 1 bis 7,
**dadurch gekennzeichnet, dass** mindestens ein Trennschalter (39) in dem Hybridsystem (37) zwischen zwei Hauptbussen (35A; 35B) und/oder Hilfsbussen (36A; 36B) angeordnet ist.

9. Luftfahrzeug (1) nach einem der Ansprüche 1 bis 8,
**dadurch gekennzeichnet, dass** das elektrische Bordnetz (16) unter einer nominalen Hauptspannung steht und/oder von einem Typ ist, bei dem die Phase der nominalen Hauptspannung sich jeweils von der einer nominalen Hilfsspannung und/oder von der Phase einer nominalen Hilfsspannung eines nominalen Stroms des elektrischen Hilfsnetzes (34) unterscheidet, sodass die Schnittstelle (38) mindestens einen Phasenwandler aufweist.

10. Luftfahrzeug (1) nach Anspruch 9,
**dadurch gekennzeichnet, dass** die nominale Spannung und/oder der Typ der Phase zwischen dem elektrischen Hauptnetz (16) und dem elektrischen Hilfsnetz (34) unterschiedlich sind, wobei mindestens ein Phasenwandler der selektiven Adaptationsschnittstelle (38) der Austauschvorgänge reversibel ist zwischen einer Austauschrichtung von Energie, die Strom zum Hauptnetz (16) liefert und einer Austauschrichtung von Energie, die Strom zum elektrischen Hilfsnetz (34) liefert.

11. Luftfahrzeug (1) nach einem der Ansprüche 1 bis 10,
**dadurch gekennzeichnet, dass** mindestens eine Haupt- und/oder Hilfsvorrichtung (12) zur Lieferung von Ladung vom elektrochemischen Typ und/oder vom kapazitiven Typ und/oder vom kinetischen Typ ist.

12. Luftfahrzeug (1) nach einem der Ansprüche 1 bis 11,
**dadurch gekennzeichnet, dass** das Hybridisierungssystem (37) mehrere Kanäle aufweist und mindestens zwei elektrische Hybridisierungsmaschinen (7) aufweist, die jede mit mindestens einer gemeinsamen Hilfsvorrichtung zur Lieferung von Ladung und/oder einem Steuerorgan oder -modul (9; 54) und/oder einer selektiven Adaptationsschnittstelle (38) versehen sind.

13. Luftfahrzeug (1) nach einem der Ansprüche 1 bis 12,
**dadurch gekennzeichnet, dass** das Hybridisierungssystem ein System mit mehreren Kanälen genannt wird und mindestens zwei elektrische Hilfsmaschinen (7) aufweist, wobei jeder Kanal mindestens eine eigene Hilfsvorrichtung (12, 15) zur Lieferung von Ladung und/oder ein eigenes Steuermodul (9) und/oder eine selektive Adaptationsschnittstelle (38) aufweist.

14. Luftfahrzeug (1) nach einem der Ansprüche 1 bis 12,
**dadurch gekennzeichnet, dass** die Hybrid-Antriebsgruppe (5) mindestens einen Hauptverbrennungsmotor (6) in Form eines Turbomotors aufweist, der an eine Maschine (7) gekoppelt ist, die einen Starter (30) bildet, der umwandelbar ist in einen Generator, und die in mechanischem Eingriff mit dem Turbomotor steht und in dem elektrischen Hauptnetz (16), welches unter Niederspannung steht, angeordnet ist, wobei ein Hybridisierungssystem (37) mindestens eine elektrische Hilfsmaschine (7, 31) in Form eines Elektromotors/Generators von Strom hoher Spannung aufweist, wobei der elektrische Hilfsmotor (31) in mechanischem Eingriff mit dem Getriebe (8) steht und in dem elektrischen Hilfsnetz (34) des Hybridisierungssystems (37), welches unter Hochspannung steht, angeordnet ist.

15. Luftfahrzeug (1) nach einem der Ansprüche 1 bis 14,
**dadurch gekennzeichnet, dass** die Hybrid-Antriebsgruppe (5) elektronische Mittel (43) zur Steuerung für den Betrieb des Hauptverbrennungsmotors (6) oder der Hauptverbrennungsmotoren und/oder des elektrischen Hilfsmotors (7, 31) oder der elektrischen Hilfsmotoren aufweist, wobei die Mittel (43) in Beziehung stehen mit mindestens einem Bedienungspaneel (46) zur manuellen Steuerung und/oder zu einem Flugsteuerungsautomaten (47) der Hybrid-Antriebsgruppe (5) und die somit nur über das elektrische Hauptnetz (34) verbunden sind und gespeist werden.

16. Luftfahrzeug (1) nach einem der Ansprüche 1 bis 15,
**dadurch gekennzeichnet, dass** die Hybrid-Antriebsgruppe elektronische Mittel (42) zur Steuerung des Zustands und des Betriebs des Hauptverbrennungsmotors (6) oder der Hauptverbrennungsmotoren (6) und/oder der elektrischen Hilfsmaschine(n) (7, 31) aufweist, wobei die Steuermittel (42) über das elektrische Hauptnetz (16) verbunden sind und gespeist werden.

17. Luftfahrzeug (1) nach Anspruch 16,
**dadurch gekennzeichnet, dass** die Steuermittel (42) mit Mitteln (48) zur Information über den Zustand und den Betrieb des Hauptverbrennungsmotors (6) oder der Hauptverbrennungsmotoren (6) und/oder der elektrischen Hilfsmaschine(n) (7) stehen, wobei diese elektronischen Steuermittel über das elektrische Hauptnetz (16) verbunden sind und gespeist werden.

18. Luftfahrzeug (1) nach einem der Ansprüche 1 bis 17,
**dadurch gekennzeichnet, dass** das Luftfahrzeug (1) eine Hilfsleistungsgruppe (56) mit einem Hilfsgenerator aufweist, wobei diese Hilfsleistungsgruppe (46) mechanisch mit dem Getriebe (8) der Hybridantriebsgruppe (5) derart verbunden ist, dass sie mit dem elektrischen Bordnetz (16) und/oder in bestimmten Flugphasen mit dem elektrischen Hilfsnetz (34) verbunden ist, und diesen Elektrizität liefert.

19. Luftfahrzeug (1) nach einem der Ansprüche 1 bis 18,
**dadurch gekennzeichnet, dass** die elektronischen Steuermittel (42) mit Mitteln (44) zum Messen, zum Analysieren und zum Speichern verbunden sind, die mindestens eines der folgenden Bestandteile aufweisen:
- einen Sensor (19) der Spannung mindestens eines des elektrischen Hauptnetzes und/oder Hilfsnetzes (34), wobei der Spannungssensor mit Mitteln zum Vergleich zwischen der erfassten Spannung oder den erfassten Spannungen und mit mindestens einer Bezugsspannung verbunden ist,
- einen Sensor (19) des Stroms mindestens eines des elektrischen Hauptnetzes und/oder Hilfsnetzes, wobei der Stromsensor mit Mitteln zum Vergleich zwischen dem erfassten Strom oder den erfassten Strömen und mit mindestens einem Bezugsstrom verbunden ist,
- einen Temperatursensor (21) der Temperatur mindestens eines der elektrischen Haupt- und/oder elektrischen Hilfs(34) netze eines des elektrischen Hauptnetzes und/oder Hilfsnetzes (34), wobei der Temperatursensor mit Mitteln zum Vergleich zwischen der gemessenen Temperatur oder den gemessenen Temperaturen und mindestens einer Bezugstemperatur verbunden ist,
- Mittel zum Analysieren des Ladungszustands von mindestens einer Vorrichtung zum Liefern von Ladung des elektrischen Hauptbordnetzes und/oder des elektrischen Hilfsbordnetzes,
- einen Sensor (25) zur Messung der Drehgeschwindigkeit mindestens eines von: Verbrennungsmotor (6) oder Verbrennungsmotoren und/oder elektrische Maschine (7; 30-31) und/oder Getriebe (8) und
- einen Zähler (20) der Anzahl der Aufladungszyklen und der Entladungszyklen mindestens einer Vorrichtung zum Liefern von Ladung des elektrischen Hauptbordnetzes (16) und/oder des elektrischen Hilfsbordnetzes, wobei der Zyklenzähler mit Mitteln (44) zur Analyse der Lebensdauer der Vorrichtung(en) zum Liefern der Ladung verbunden ist.

20. Luftfahrzeug (1) nach einem der Ansprüche 1 bis 19,
**dadurch gekennzeichnet, dass** das Hybridisierungssystem (37) mindestens ein System (32) zum Wiedergewinnen kinetischer Energie (SREC) aufweist, das mechanisch oder elektrisch mit mindestens einer elektrischen Hilfsmaschine (7, 31) verbunden ist, um einen Teil der kinetischen Energie wiederzugewinnen, die von dessen Abbremsungen erzeugt wird und die elektrisch mit dem elektrischen Hilfsnetz (34) derart verbunden ist, dass sie wiederum im Bedarfsfall diese elektrische Hilfsmaschine (7, 31) speisen kann.

21. Luftfahrzeug (1) nach einem der Ansprüche 1 bis 20,
**dadurch gekennzeichnet, dass** im Fall einer Antriebsgruppe (5), die mit mindestens einem System (32) zur Wiedergewinnung kinetischer Energie versehen ist, ein Geschwindigkeitssensor (25) an dieses System (32) angeschlossen ist, derart, dass er die momentane Drehgeschwindigkeit bestimmt, wobei dieser Geschwindigkeitssensor zum Beispiel in die Mittel (44) zum Messen, zum Analysieren und zum Speichern integriert ist.

22. Verfahren zum Betrieb eines Luftfahrzeugs (1) nach einem der Ansprüche 1 bis 21,
**dadurch gekennzeichnet, dass** dieses Verfahren vorsieht:
- in der Phase des Startens des Verbrennungsmotors (6) Auslösen des Startvorgangs ausgehend von dem Starter, der über das elektrische Hilfsnetz (34) gespeist wird, wobei dies insbesondere im Fall eines Verbrennungsmotors (6) zur Anwendung kommt,
- in der Flugphase Antreiben des Getriebes (8) mit dem Verbrennungsmotor (6) in einem autonomen Betriebsmodus, und
- in der Flugphase und für eine gelegentliche Lieferung mechanischer Energie an das Getriebe Antreiben des Getriebes (8) ausgehend von einer elektrischen Hilfsmaschine (7, 31), die am Motor angebracht ist und die von mindestens einer Vorrichtung (12) zur Lieferung von Ladung des elektrischen Hauptnetzes (16) gespeist wird, zusätzlich zu dem Antrieb des Getriebes über den Verbrennungsmotor (6) für spezifische Flugsteuerungsbefehle und/oder als Ersatz für den Antrieb des Getriebes durch den Verbrennungsmotor (6), falls dieser ausfällt.

23. Verfahren nach Anspruch 22,
**dadurch gekennzeichnet, dass** dieses Verfahren vorsieht, das elektrische Bordnetz (16) ausgehend von dem elektrischen Hilfsnetz (34) über die selektive Adaptationsschnittstelle (38) für den gegebenen Fall zu speisen:
- Ersatz bzw. Ergänzung bei einem eventuellen Ausfall von mindestens einer der folgenden Vorrichtungen: Vorrichtung (12) zum Liefern von Ladung des elektrischen Hauptnetzes und/oder reversible elektrische Maschine (7, 30), und/oder
- Entlastung des Verbrennungsmotors (6) zum Antrieb der reversiblen elektrischen Maschine (7, 30).

24. Verfahren nach Anspruch 22 oder 23,
**dadurch gekennzeichnet, dass** das Verfahren vorsieht:
- in der Startphase des Verbrennungsmotors (6) einen Antrieb des Getriebes über eine elektrische Hilfsmaschine (7, 31) mit einer Bezugsgeschwindigkeit, die größer ist als die, die vorgegeben ist während eines Antriebs des Verbrennungsmotors (6) durch die elektrische Maschine (7), die den reversiblen Starter (30) bildet, um den Verbrennungsmotor von dem Getriebe (8) zu entkoppeln,
- ein Verlangsamen des Verbrennungsmotors (6) in dem autonomen Betriebsmodus des Verbrennungsmotors (6) und
- ein Koppeln durch Einkuppeln des Verbrennungsmotors (6) mit dem Getriebe (8) ausgehend von einer progressiven Beschleunigung des Verbrennungsmotors (6) bis zu einer Geschwindigkeit, die der Antriebsgeschwindigkeit des Getriebes durch die elektrische Hilfsmaschine (7) entspricht, über einen Freilauf oder Entsprechendes, wobei dieser Freilauf zwischen dem Verbrennungsmotor (6) und dem Getriebe (8) deren Entkopplung durchführt.

25. Verfahren nach einem der Ansprüche 22 bis 24,
**dadurch gekennzeichnet, dass** das Verfahren vorsieht: in der Flugphase und am Boden wird mechanische Energie ausgehend von dem Getriebe (8) von dem elektrischen Hilfsmotor entnommen, um ein Abbremsen des Rotors (3, 4), der mit diesem Getriebe verbunden ist, zu bewirken.

26. Verfahren nach einem der Ansprüche 22 bis 25,
**dadurch gekennzeichnet, dass** das Verfahren einen gedoppelten Betrieb der Wiederaufnahme der Speisung der Hilfsvorrichtungen (12) zur Lieferung elektrischer Ladung vorsieht, zum Beispiel um die Lieferung elektrischer Energie an Ausrüstungen (40; 41) redundant zu gestalten und zum Beispiel in jedem Fall mit einem Instrumentenflug kompatibel zu gestalten.

27. Verfahren nach einem der Ansprüche 22 bis 26,
**dadurch gekennzeichnet, dass** Anzeigemittel (17) ausgehend von Daten, die von den Mitteln (44) zum Messen, zum Analysieren und zum Speichern geliefert werden, eine repräsentative Information beschaffen über einen Wert der Einsatzzeit der elektrischen Hybridisierungsmaschine, die bei maximaler Leistung zur Verfügung bleibt, wobei dieser Wert der Betriebszeit berücksichtigt wird ausgehend von einem momentanen Ladungszustand der elektrischen Maschine (7) und der ersten Leistung, die diese Maschine (7) im gegebenen Moment zu liefern imstande ist, zum Beispiel ist diese erste Leistung eine maximale Leistung.

## Claims

1. A rotary-wing aircraft (1), which comprises an onboard electrical network (16) and at least: a motor-driving assembly (5) with at least one rotor (3, 4) which is to be driven in rotation, at least one transmission (8) for driving said rotor (3, 4) in rotation; at least one motor-driving assembly (5) of the aircraft (1) is hybrid, and associates at least one what is called main combustion engine (6) with at least one auxiliary hybridisation (31) electric machine (7); the main combustion engine (6) and the auxiliary electric machine (7) being mechanically coupled to the transmission (8); said auxiliary electric machine (7) being placed within the hybrid motor-driving assembly (5), forming alternatively a member for mechanically driving the transmission (8) or a member which generates current under the effect of its mechanical driving by said transmission (8); the onboard electrical network (16) has at least one main electrical bus (35; 35A-3 5 B) at a main rated voltage; on the main electrical bus there are mounted at least one main electric-charge-providing device (12), with at least one main storage battery (13, 14), and an electric machine (7) forming a starter (30), which is reversible as a generator, this machine (7) which forms a starter (30) being mechanically connected to said combustion engine (6),
**characterised in that** the hybrid motor-driving assembly (5) of the aircraft (1) comprises at least one hybridisation system (37) with at least one auxiliary electrical network (34) for the hybridisation which has a dedicated auxiliary electrical bus (36; 36A-36B), to which is electrically connected said auxiliary electric machine (7, 31), at an auxiliary rated voltage; the main electrical bus and the auxiliary hybridisation electrical bus being connected by at least one selective adaptation interface (38) such that the main onboard network (16) and the auxiliary network (34) are electrically distinguishable.

2. An aircraft (1) according to Claim 1,
**characterised in that** the machine (7) forming a starter (30) is electrically mounted on the main network (16) by means of disconnection means (24) of what is called a main charge-providing device (12) within the main network (16); whereas on one hand a monitoring and control member (9) or module and also said auxiliary (31) machine (7), and on the other hand at least one selective adaptation interface (38) arranged for selectively permitting, by selective connection to the main electrical network, exchanges of electrical energy between the main (16) and auxiliary (34) electrical networks, are connected electrically to the auxiliary electrical bus (36).

3. An aircraft (1) according to Claim 1 or 2,
**characterised in that** said auxiliary (31) machine (7) which is mechanically connected to said transmission (8) is electrically connected to the auxiliary electrical bus (35; 36A-36B), in parallel with at least one what is called auxiliary electric-charge-providing device (12), with at least one secondary storage battery (15); this auxiliary providing device (12), the monitoring member (9), the auxiliary (31) machine (7), the auxiliary network (34) and the selective adaptation interface (38) forming part of the hybridisation system (37).

4. An aircraft (1) according to one of Claims 1 to 3,
**characterised in that** the motor-driving assembly (5) comprises a single main transmission gearbox (BTP) (8), mechanically connected to at least one lift rotor (3) of the aircraft (1) and to a single combustion engine (6), such as a turboshaft engine or diesel engine; at least one auxiliary (31) electric machine (7) being connected to this gearbox.

5. An aircraft (1) according to Claim 4,
**characterised in that** the motor-driving assembly (5) comprises a single main transmission gearbox (BTP) (8), and at least two auxiliary electric machines which are connected to this gearbox.

6. An aircraft (1) according to one of Claims 1 to 3,
**characterised in that** the motor-driving assembly (5) comprises a single main transmission gearbox (BTP) (8), mechanically connected to at least one lift rotor (3) of the aircraft (1) and to a plurality of combustion engines (6), such as two turboshaft engines or diesel engines; at least one auxiliary (31) electric machine (7) being connected to this gearbox.

7. An aircraft (1) according to one of Claims 1 to 3,
**characterised in that** the motor-driving assembly (5) comprises at least one auxiliary transmission gearbox (BTA) (8), mechanically connected to at least one auxiliary rotor (4), such as tail rotor(s) and/or propulsion rotor(s) of at least one lateral propeller arrangement of a long-range high-speed rotary-wing aircraft (1); at least one auxiliary (31) electric machine (7) being connected to this gearbox.

8. An aircraft (1) according to one of Claims 1 to 7,
**characterised in that** at least one splitting contactor (39) is arranged in the hybridisation system (37) between two main (35A; 35B) and/or auxiliary (36A; 36B) buses.

9. An aircraft (1) according to one of Claims 1 to 8,
**characterised in that** the onboard electrical network (16) is at a main rated voltage and/or of a main phase type which is/are distinct respectively from an auxiliary rated voltage and/or from an auxiliary phase type of a rated current of the auxiliary electrical network (34); therefore the interface (38) comprises at least one phase converter.

10. An aircraft (1) according to Claim 9,
**characterised in that** the rated voltage and/or phase type are distinct between the main and auxiliary electrical networks (16; 34), at least one phase converter of the selective exchange adaptation interface (38) is reversible between a direction of energy exchange for supplying electricity to the main network (16) and a direction of energy exchange for supplying electricity to the auxiliary electrical network (34).

11. An aircraft (1) according to one of Claims 1 to 10,
**characterised in that** at least one main and/or auxiliary charge-providing device (12) is of the electrochemical and/or capacitive and/or kinetic type.

12. An aircraft (1) according to one of Claims 1 to 11,
**characterised in that** the hybridisation system (37) is a multi-channel system and comprises at least two electric hybridisation machines (7), each having in common at least one auxiliary charge-providing device (12) and/or a monitoring member or module (9; 54) and/or a selective adaptation interface (38).

13. An aircraft (1) according to one of Claims 1 to 12,
**characterised in that** the hybridisation system is said to be a multi-channel system and comprises at least two auxiliary electric machines (7), each channel having at least one auxiliary charge-providing device (12, 15) and/or a monitoring module (9) and/or a selective adaptation interface (38) specific thereto.

14. An aircraft (1) according to one of Claims 1 to 12,
**characterised in that** the hybrid motor-driving assembly (5) comprises at least one main combustion engine (6) in the form of a turboshaft engine coupled to a machine (7) forming a starter (30), which is reversible as a generator, mechanically engaged on the turboshaft engine and placed in a main electrical network (16) at low voltage; a hybridisation system (37) comprising at least one auxiliary (31) electric machine (7) in the form of an electric motor/current generator of high voltage, this auxiliary electric motor (31) being mechanically engaged on the transmission (8) and being placed on the high-voltage auxiliary electrical network (34) of said hybridisation system (37).

15. An aircraft (1) according to one of Claims 1 to 14,
**characterised in that** the hybrid motor-driving assembly (5) comprises electronic means (43) for controlling the operation of the main combustion engine or engines (6) and/or of the auxiliary electric (31) motor or motors (7), said means (43) being in connection with one at least of a manual control console (46) and/or a flight controller (47) of the hybrid motor-driving assembly (5) and being connected and powered via the main electrical network (34).

16. An aircraft (1) according to one of Claims 1 to 15,
**characterised in that** the hybrid motor-driving assembly (5) comprises electronic means (42) for monitoring the state and the operation of the main combustion engine or engines (6) and/or of the auxiliary electric (31) machine or machines (7), these monitoring means (42) being connected and powered via the main electrical network (16).

17. An aircraft (1) according to Claim 16,
**characterised in that** the monitoring means (42) are in connection with means providing information (48) about the state and the operation of the main combustion engine or engines (6) and/or of the auxiliary electric machine or machines (7), these electronic monitoring means being connected and powered via the main electrical network (16).

18. An aircraft (1) according to one of Claims 1 to 17,
**characterised in that** the aircraft (1) comprises an auxiliary power unit (56) with an auxiliary generator; this auxiliary power unit (56) is mechanically connected to said transmission (8) of the hybrid motor-driving assembly (5) in such a way as to be connected and to supply electricity to the onboard electrical network (16) and/or to the auxiliary electrical network (34) in certain flight phases.

19. An aircraft (1) according to one of Claims 1 to 18,
**characterised in that** the electronic monitoring means (42) are associated with measurement, analysis and storage means (44) which comprise at least one of the following components:
- a voltage sensor (19) for sensing the voltage of one at least of the main electrical network and/or of the auxiliary electrical network (34), said voltage sensor being associated with means of comparison between the sensed voltage or voltages and at least one set voltage;
- a current sensor (19) for sensing the current of one at least of the main electrical network and/or of the auxiliary electrical network (34), said current sensor being associated with means of comparison between the sensed current or currents and at least one set current;
- a temperature sensor (21) for sending the temperature of one at least of the main electrical network and/or of the auxiliary electrical network (34), this temperature sensor being associated with means for comparison between the sensed temperature or temperatures and at least one set temperature;
- means for analysing the state of charge of at least one device for providing a charge of the main and/or auxiliary onboard electrical network (16);
- a speed of rotation sensor (25) for at least one of the: combustion engine(s) (6) and/or electric machine (7; 30-31) and/or transmission (8); and
- a counter (20) which counts the number of recharging and discharging cycles of at least one device for providing a charge of the main and/or auxiliary onboard electrical network (16), said cycle counter being associated with means for analysing (44) the life of the device or devices for providing a charge.

20. An aircraft (1) according to one of Claims 1 to 19,
**characterised in that** the hybridisation system (37) comprises at least one kinetic energy recovery system (KERS) (32) which is mechanically or electrically connected to at least one auxiliary electric (31) machine (7) for recovering a portion of the kinetic energy generated by its decelerations, and electrically connected to the auxiliary electrical network (34) so as to be able to power this auxiliary electric (31) machine (7) in return if need be.

21. An aircraft (1) according to one of Claims 1 to 20,
**characterised in that** in the case of a motor-driving assembly (5) provided with at least one kinetic recovery system (32), a speed sensor (25) is coupled to this system (32) so as to determine the instantaneous speed of rotation thereof, this speed sensor being for example integrated in measurement, analysis and storage means (44).

22. A method for operating an aircraft (1) according to one of Claims 1 to 21,
**characterised in that** this method provides:
- in the start-up phase of the combustion engine (6), for initiating this start-up from the starter which is powered via the auxiliary electrical network (34): this applies in particular in the case of a combustion engine (6);
- in the flight phase, for driving the transmission (8) by said combustion engine (6) in autonomous operating mode; and
- in the flight phase and for occasionally supplying mechanical energy to the transmission, for driving the latter (8) from an auxiliary electric (31) machine (7) arranged as a motor and powered by at least one device (12) for providing a charge of the main electrical network (16), in addition to the driving of the transmission by the combustion engine (6) for specific flight commands and/or as a substitute for the driving of the transmission by said combustion engine (6) in the event of the latter (6) failing.

23. A method according to Claim 22,
**characterised in that** this method provides for powering the onboard electrical network (16) from the auxiliary electrical network (34) by means of the selective adaptation interface (38), in order to if applicable:
- compensate for the possible failure of one at least: of the device (12) for providing a charge of the main electrical network and/or of a reversible electric (30) machine (7); and/or
- relieve the combustion engine (6) from driving the reversible electric (30) machine (7).

24. A method according to Claim 22 or 23,
**characterised in that** this method provides for:
- in the start-up phase of the combustion engine (6), driving of the transmission by an auxiliary electric (31) machine (7) at a set speed which is greater than the one then assigned to driving the combustion engine (6) by the electric machine (7) which forms a reversible starter (30), in order to disengage the combustion engine (6) from said transmission (8);
- allowing the combustion engine (6) to idle in the autonomous operating mode of this combustion engine (6); and
- coupling by docking the combustion engine (6) with the transmission (8), starting from progressive acceleration of the combustion engine (6), up to a speed corresponding to the speed of driving of the transmission by said auxiliary electric machine (7), via a freewheel or the like; this freewheel between the combustion engine (6) and transmission (8) bringing about the decoupling thereof.

25. A method according to one of Claims 22 to 24,
**characterised in that** this method provides that, in the flight phase and on the ground, mechanical energy is taken from the transmission (8) by the auxiliary electric motor in order to bring about braking of said rotor (3; 4) which is connected to this transmission.

26. A method according to one of Claims 22 to 25,
**characterised in that** this method provides for a doubled-up operation replicating powering of the devices (12) for auxiliary provision of electric charge, for example to make the provision of electrical energy to the items of equipment (40; 41) redundant and for example compatible in all territories with instrument flight.

27. A method according to one of Claims 22 to 26,
**characterised in that** display means (17) produce, from data provided by these measurement, analysis and storage means (44), information representing a value of time of use of the electric hybridisation machine remaining available at maximum power; this value of time of use being taken into account from a state of instantaneous load of said electric machine (7) and of the first power which this machine (7) is capable of delivering at the given moment, for example this first power is a maximum power.
